(19) Europäisches Patentamt / European Patent Office / Office européen des brevets

(11) **EP 3 880 497 B1**

(12) **FASCICULE DE BREVET EUROPEEN**

(45) Date de publication et mention de la délivrance du brevet:
**25.10.2023 Bulletin 2023/43**

(21) Numéro de dépôt: **19832718.1**

(22) Date de dépôt: **14.11.2019**

(51) Classification Internationale des Brevets (IPC):
*B60C 11/24* (2006.01)   *B60C 23/04* (2006.01)
*B60T 8/172* (2006.01)   *B60W 40/064* (2012.01)
*B60W 40/068* (2012.01)

(52) Classification Coopérative des Brevets (CPC):
**B60T 8/172; B60C 11/246; B60C 23/0486; B60C 23/0488; B60T 8/17616; B60W 40/064; B60W 40/068;** B60C 2019/004; B60T 2210/36; B60W 2520/10

(86) Numéro de dépôt international:
**PCT/FR2019/052696**

(87) Numéro de publication internationale:
**WO 2020/099783 (22.05.2020 Gazette 2020/21)**

(54) **PROCEDE DE DETERMINATION DU GLISSEMENT D'UN PNEUMATIQUE**

VERFAHREN ZUR FESTSTELLUNG EINES RADSCHLUPFES

METHOD FOR DETERMINING A WHEEL SLIP

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.11.2018  FR 1860480**

(43) Date de publication de la demande:
**22.09.2021  Bulletin 2021/38**

(73) Titulaire: **COMPAGNIE GENERALE DES ETABLISSEMENTS MICHELIN**
**63000 Clermont-Ferrand (FR)**

(72) Inventeurs:
• **PILON, Vincent**
  **63040 CLERMONT FERRAND CEDEX 9 (FR)**
• **PATURLE, Antoine**
  **63040 CLERMONT-FERRAND CEDEX 9 (FR)**

(74) Mandataire: **Béniguel, Jean-François Joseph Emile**
**Manufacture Française des Pneumatiques Michelin**
**Service juridique - Propriété Intellectuelle**
**DCJ/PI - F35 - Site de Ladoux**
**23, place des Carmes - Déchaux**
**63040 Clermont-Ferrand Cedex 9 (FR)**

(56) Documents cités:
EP-A1- 2 883 772     WO-A1-2017/221578
DE-T5-112017 000 906

**EP 3 880 497 B1**

**Description**

DOMAINE TECHNIQUE GENERAL ET CONTEXTE DE L'INVENTION

La présente invention concerne la détermination de conditions de roulage d'un pneumatique sur un sol. Plus précisément, l'invention propose de déterminer le glissement d'un pneumatique au moyen d'un signal de mesure représentatif de la courbure circonférentielle du pneumatique et de la vitesse de translation du véhicule par rapport au sol.

Il s'avère utile en effet de connaître à tout instant les conditions de roulage d'un pneumatique sur un sol, pour interagir avec le conducteur ou avec les systèmes d'assistance à la conduite, de manière à les informer en temps réel de l'évolution des conditions de roulage, et éventuellement de réagir à celles-ci. En effet, dans un véhicule monté sur roues, les pneumatiques représentent généralement les seuls points de contact avec le sol, par où s'exercent les principales interactions mécaniques du véhicule avec son environnement. Par exemple, la demande de brevet WO2017221578 décrit un appareil d'estimation des conditions de surface de la route, fournissant un signal de détection correspondant à l'amplitude d'une vibration d'un pneumatique.

Le glissement se définit comme l'écart entre la vitesse circonférentielle d'un pneumatique en roulement sur un sol et la vitesse de translation du véhicule sur lequel est monté ce pneumatique par rapport au sol. Typiquement, le glissement s'exprime par un coefficient G exprimant en pourcentage le glissement du pneumatique, avec G à 0% lorsque la rotation du pneumatique correspond à la vitesse de translation du véhicule, et G à 100 % lorsque le pneumatique tourne sans que n'avance le véhicule (on dit alors que la roue patine complètement).

Le glissement est important dans la mesure où il affecte directement la performance du véhicule, en termes de consommation de carburant, de capacité de traction, de maniabilité et de sécurité (en raison de la perte d'adhérence et donc de contrôle), mais également pour les dommages causés au sol par le pneumatique. Une bonne adhérence permet de transmettre efficacement le couple de traction en limitant le gaspillage d'énergie et l'usure des pneumatiques. Un fort glissement est le symptôme d'une perte d'adhérence, et ces caractéristiques se trouvent dégradées en cas de perte d'adhérence. Le glissement est donc un enjeu notamment pour les véhicules entraînant des outils de travail, comme par exemple des tracteurs agricoles travaillant un sol meuble, en particulier.

Plusieurs approches peuvent être utilisées afin de limiter le glissement. Il est possible d'augmenter la surface de contact au sol, par exemple en réduisant la pression interne de gonflage du pneumatique. Cette pression interne réduite peut cependant augmenter la consommation et user les pneumatiques si la vitesse ou la charge est trop élevée, ou le sol trop dur. Il est également possible d'utiliser des masses d'alourdissement disposées sur le véhicule, afin de pouvoir transmettre plus d'effort au sol et ainsi de limiter le glissement. Toutefois, une telle solution augmente le poids du véhicule à déplacer, la consommation et le tassement du sol. Connaître en temps réel le glissement permettrait donc d'adapter aux conditions de roulage la configuration du véhicule. Il peut par exemple être envisagé de piloter le télé-gonflage du pneumatique en fonction du glissement que subit le pneumatique, afin d'optimiser le compromis entre la traction, la consommation et le tassement. Il est également possible de réduire la vitesse en présence de glissement ou à l'inverse d'augmenter celle-ci s'il n'y a pas de glissement.

Certains véhicules tels que des tracteurs agricoles peuvent être équipés de dispositifs de mesure de glissement, qui fonctionnent à partir d'un codeur roue permettant de détecter chaque tour de roue. Par exemple, un capteur électromagnétique est chargé de compter le nombre de passages d'un aimant situé sur la roue. A partir du nombre de tours de roue par minute et de la circonférence de la roue, une vitesse de roulement estimée peut être déterminée. Il s'agit typiquement de la vitesse qui est indiquée au conducteur par l'indicateur de vitesse d'un véhicule. Si en absence de glissement cette vitesse estimée correspond à la vitesse de translation du véhicule, ce n'est pas le cas en présence de glissement, où la vitesse de roulement estimée est alors plus élevée que la vitesse de translation du véhicule. Par conséquent, en comparant ces deux vitesses, il est possible d'estimer le glissement.

Toutefois, cette approche requiert de connaître exactement la circonférence de roulement qui permet de passer de la période de tour de roue à la distance parcourue pendant cette période. Or, la circonférence de roulement dépend du type de pneumatique, de sa dimension, de la pression du pneumatique, de la charge auquel le pneumatique est soumis, voire du couple et de l'usure que subit le pneumatique. Ainsi, faute de connaître précisément la circonférence de roulement du pneumatique, les dispositifs existants ne permettent pas d'estimer correctement le glissement, et ne peuvent donc pas être utiliser pour optimiser l'utilisation du véhicule.

PRESENTATION DE L'INVENTION

Un but de l'invention est de permettre de déterminer en temps réel le glissement auquel est soumis un pneumatique monté sur un véhicule, de façon fiable et précise, qui soit affranchi des variations de résultats entraînés par les variations des caractéristiques du pneumatiques ou du véhicule.

A cet effet, il est proposé un procédé de détermination du glissement d'un pneumatique monté sur un véhicule et roulant sur le sol, comme défini dans la revendication indépendante 1 ci-jointe en annexe.

Le procédé permet de déterminer en temps réel le glissement auquel est soumis un pneumatique monté sur un véhicule, de façon fiable et précise quel que soit la vitesse de translation du véhicule par rapport au sol, à partir du seul signal de mesure représentatif de l'évolution de la courbure du pneumatique et d'une mesure de cette vitesse de translation du véhicule par rapport au sol.

Ce procédé est avantageusement complété par les caractéristiques suivantes, prises seules ou en une quelconque de leur combinaison techniquement possible :

- la circonférence de roulement du pneumatique $C_r$ est déterminée selon une relation du type :

$$C_r = Z \times KT \times V_v$$

avec KT le premier paramètre représentatif d'une durée d'un tour de roue du pneumatique, $V_v$ la vitesse de translation du véhicule par rapport au sol, et Z un facteur de conversion des unités ;

- une expression d'un pourcentage de glissement du pneumatique est déterminée selon une relation du type :

$$G = 100 \left(1 - \frac{KT \times V_v}{Z \times C_r}\right)$$

avec G le glissement, KT le premier paramètre représentatif d'une durée d'un tour de roue du pneumatique, $V_v$ la vitesse de translation du véhicule par rapport au sol, $C_r$ la circonférence de roulement du pneumatique, et Z un facteur de conversion des unités ;

- la vitesse de translation du véhicule par rapport au sol est obtenue au moyen d'un récepteur d'un système de positionnement par satellite solidaire du véhicule ou radar ;

- lors du roulement, au cours d'un tour de roue, la courbure du pneumatique évolue selon un cycle présentant une partie hors contact avec le sol se caractérisant sur le signal de mesure par une courbure stable, une partie en contact avec le sol se caractérisant sur le signal de mesure par un pic de variation de courbure de contact, une transition dite transition d'entrée entre la partie hors contact avec le sol et la partie en contact avec le sol, se caractérisant sur le signal de mesure par un pic de variation de courbure d'entrée opposé au pic de variation de courbure de contact, une transition dite de sortie entre la partie en contact avec le sol et la partie hors contact avec le sol, se caractérisant sur le signal de mesure par un pic de variation de courbure de sortie opposé au pic de variation de courbure de contact, le premier paramètre représentatif d'une durée d'un tour de roue du pneumatique étant déterminé à partir d'une durée entre un pic de variation de courbure de sortie d'un premier tour de roue et un pic de variation de courbure de sortie d'un tour de roue suivant ;

- les données de mesure déterminées à partir du signal de mesure représentatif de l'évolution de la courbure du pneumatique au cours du roulement comprennent un deuxième paramètre représentatif d'une longueur d'une surface de contact avec le sol lors d'un tour de roue du pneumatique, et un troisième paramètre représentatif d'une vitesse de mise à plat du pneumatique lors du contact avec le sol lors d'un tour de roue du pneumatique ;

- lors du roulement, au cours d'un tour de roue, la courbure du pneumatique évolue selon un cycle présentant une partie hors contact avec le sol, et une partie en contact avec le sol, le deuxième paramètre étant déterminé à partir d'une partie du signal de mesure correspondant à la partie en contact avec le sol, et le troisième paramètre étant déterminé à partir d'une partie du signal de mesure correspondant à une transition de la courbure du pneumatique entre la partie hors contact avec le sol et la partie en contact avec le sol ;

- le troisième paramètre est déterminé par une pente entre le pic de variation de courbure d'entrée et le pic de variation de courbure de contact ;

- le facteur de fermeté du sol est déterminé en utilisant une relation liant le facteur de fermeté du sol, le deuxième paramètre et le troisième paramètre ;

- la relation liant le facteur de fermeté du sol, le deuxième paramètre et le troisième paramètre est une relation linéaire, et est de la forme :

$$F = a + b \times KL + c \times KS$$

avec F le facteur de fermeté, KL le deuxième paramètre, KS le troisième paramètre, et a, b, c des coefficients fixes non nuls préalablement déterminés.

L'invention concerne également une unité de traitement de données configurée pour obtenir une mesure de vitesse de translation du véhicule par rapport au sol et des données de mesure dérivées d'un signal de mesure représentatif de l'évolution de la courbure du pneumatique lors du roulement sur un sol, comme définie dans la revendication indépendante 11 ci-jointe en annexe.

L'invention concerne également un véhicule comme défini dans la revendication 12 ci-jointe en annexe. .

DESCRIPTION BREVE DES DESSINS

D'autres caractéristiques, buts et avantages de l'invention ressortiront de la description qui suit, qui est purement illustrative et non limitative, et qui doit être lue en regard des dessins annexés parmi lesquels :

- la Fig. 1 illustre de façon schématique un pneumatique monté sur une jante d'un véhicule ;
- la Fig. 2 présente un exemple d'un signal de mesure enregistré par un capteur sensible à la courbure du pneumatique lorsque le pneumatique roule ;

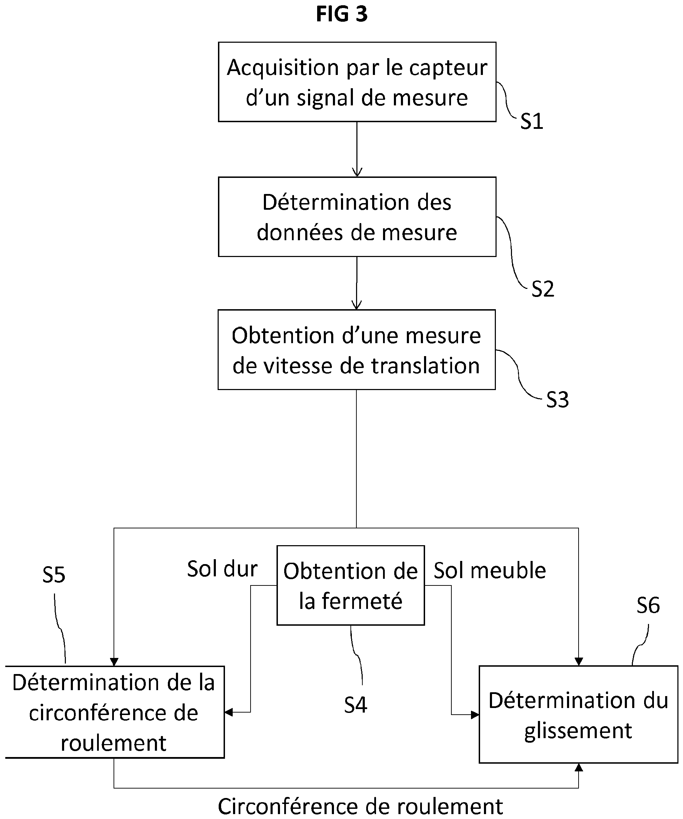

- la Fig. 3 présente un synoptique des étapes de la méthode d'évaluation de la fermeté d'un sol selon un mode de réalisation possible de l'invention ;
- la Fig. 4 montre un exemple d'analyse statistique en deux dimensions selon les deux paramètres dérivés du signal de mesure pour un pneumatique avant d'un véhicule selon différents états de fermeté du sol ;
- la Fig. 5 montre un exemple d'analyse discriminante en une dimension pour un pneumatique avant d'un véhicule ;
- la Fig. 6 montre un exemple de classification de la fermeté des sols ;
- la Fig. 7 montre des exemples d'effets de pression et de charge sur la circonférence de roulement sur un sol dur, toutes vitesses confondues ;
- la Fig. 8 montre des exemples d'effet de la vitesse sur la circonférence de roulement sur un sol dur pour une pression et une charge donnée ;
- les Fig. 9a et 9b montrent des exemples de valeurs prises par un paramètre représentatif d'une durée d'un tour de roue du pneumatique et par le glissement selon trois configurations de glissement imposé.

DESCRIPTION DETAILLEE

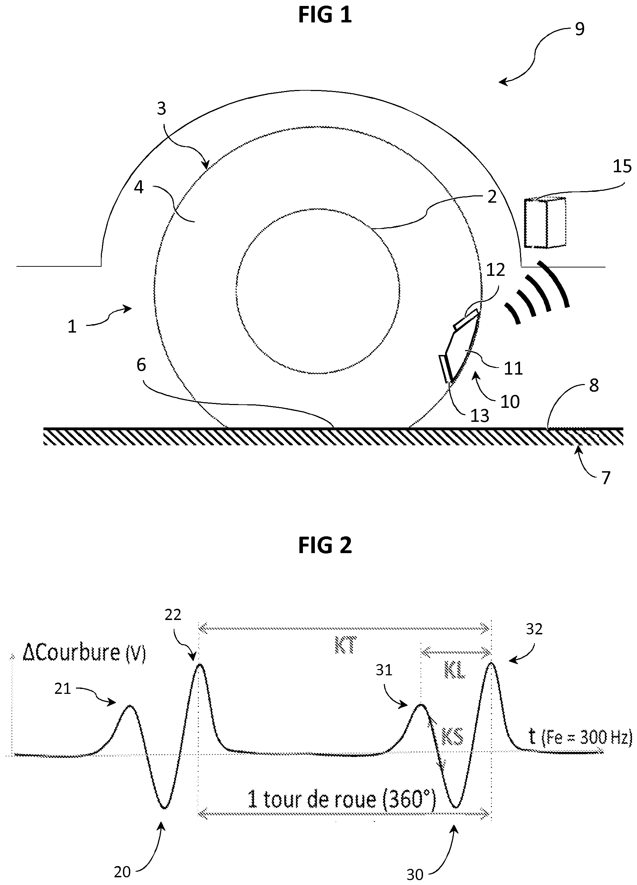

La Fig. 1 illustre un pneumatique 1 monté sur une jante 2. Un tel pneumatique 1 comprend d'une part une zone sommet 3 constituant une bande de roulement présentant des sculptures, et d'autre part des flancs 4 se terminant par des zones basses. Celles-ci comportent généralement une tringle et un talon pour permettre le montage du pneumatique 1 sur la jante 2. La jante 2 est elle-même reliée au véhicule 9 par un essieu (non représenté). Le pneumatique 1 permet ainsi la liaison entre le véhicule 9 et le sol 7.

On entend ainsi par pneumatique un solide souple conçu pour être monté sur la jante 2 d'une roue, généralement sous forme de bandage, afin d'assurer la liaison entre le véhicule 9 et le sol 7, comportant une bande de roulement subissant une modification de son rayon de courbure circonférentielle lorsqu'il est soumis à un effort. Le pneumatique 1 est typiquement formé d'élastomères (par exemple gomme) et éventuellement d'autres matériaux textiles et/ou métalliques. Le pneumatique 1 peut être sans air, et par exemple avec des rayons de polyuréthane flexible qui supportent la bande de roulement. De préférence toutefois, un pneumatique 1 comprend une enveloppe flexible renfermant un intérieur gazeux sous pression, typiquement de l'air. Comme il s'agit du type le plus courant de pneumatique 1, la description qui suit est faite de manière non limitative en référence à un tel pneumatique 1 présentant une pression interne de gaz sous pression.

Le pneumatique 1 est soumis à une force appliquée par le véhicule 9, via l'essieu et la jante 2, en direction du sol 7. Cette force tire son origine de la charge à l'essieu, résultant du poids du véhicule 9. La jante 2 étant indéformable, cette force s'appliquant sur le pneumatique 1 déforme celui-ci lorsque le pneumatique 1 est au contact de la surface 8 du sol 7 : la partie du sommet 3 sous la jante 2 s'aplatit, ce qui augmente la surface de contact 6 du pneumatique 1 avec le sol, tandis que les flancs 4 se gonflent. Cette déformation est d'autant plus prononcée que la pression à l'intérieur du pneumatique est faible. La nature du sol 7 influe également sur cette déformation, et en particulier l'état de fermeté de ce sol 7. En effet, un sol dur ne se déforme pas ou peu, tandis qu'un sol mou se déforme sous l'action du pneumatique 1, de sorte que la déformation du pneumatique 1 est moindre, en partie transférée au sol 7.

La déformation du pneumatique 1 se traduit par une modification de la courbure circonférentielle du pneumatique 1, c'est-à-dire de la courbure de la zone sommet 3. Lorsque le pneumatique 1 roule, cette modification de la courbure parcourt la circonférence du pneumatique 1. Pour un point donné du pneumatique 1, la courbure va donc varier périodiquement à chaque tour de roue.

Le pneumatique 1 est muni d'un capteur 10 configuré pour acquérir un signal de mesure représentatif de l'évolution de la courbure du pneumatique. Ce capteur 10 est disposé à l'intérieur de l'enveloppe du pneumatique 1. De préférence, le capteur 10 est disposé contre la zone sommet 3. Le capteur 10 peut être enfoui dans la structure de l'enveloppe du pneumatique 10, ou bien être rapporté sur celle-ci, et par exemple maintenu en place par une couche adhésive. Le capteur 10 comporte une partie active 11 solidaire de l'enveloppe du pneumatique 1, de sorte que la déformation du pneumatique 1 entraîne une déformation correspondante de la partie active 11 du capteur 10, lequel génère un signal de mesure fonction de la déformation de sa partie active 11. Le signal de mesure est donc bien représentatif de l'évolution de la courbure du pneumatique.

De préférence, le capteur 10 est un capteur piézoélectrique, lequel génère une tension proportionnelle à la variation de flexion. Plus précisément, le capteur 10 peut par exemple comprendre une partie active 11 constituée d'une couche piézoélectrique entre deux couches conductrices. Il est également possible que le capteur 10 soit un capteur résistif, dont l'impédance est proportionnelle à la flexion de la partie active 11 du capteur. On peut également utiliser un accéléromètre, quoique d'utilisation bien plus complexe et demandant un traitement plus important. Le capteur 10 peut également être adapté pour mesurer d'autres paramètres, et en particulier la pression. Le capteur 10 peut être intégré dans un autre équipement électronique installé dans le pneumatique 1, tel qu'un capteur de pression et/ou de température de type TMS, de l'anglais "tyre monitoring system" pour "contrôle automatique du pneu".

Le capteur 10 comprend également une carte électronique 12 reliée à la partie active 11 du capteur 10 et configurée pour recevoir le signal de mesure en provenance de la partie active 11. Cette carte électronique 12 comprend au moins un processeur et une mémoire, et est adaptée pour traiter des données telles que le signal de mesure, pour déterminer des données de mesure à partir du signal de mesure, et pour communiquer ces données de mesure. De préférence, le capteur 10 est associé à un émetteur sans fil, notamment de type radiofréquence, et par exemple du type utilisant la technologie Bluetooth Low Energy (Bluetooth à basse énergie) ou du type appareil de faible puissance opérant dans la bande des 433 MHz (LPD 433), permettant de relayer le signal de mesure à une unité de traitement 15 automatisée de données, de préférence disposée à l'extérieur du pneumatique 1, pour son traitement. L'émetteur sans fil peut faire partie du capteur 10, par exemple en tant que composant de la carte électronique 12, ou être distinct du capteur 10. On peut ainsi par exemple prévoir une antenne à l'intérieur du pneumatique 1. Dans le cas d'une communication sans fil, un récepteur externe peut recevoir les signaux envoyés par les moyens de communication sans fil associés au capteur 10, et les relayer à l'unité de traitement 15 automatisée de données.

Bien entendu, le capteur 10 peut comprendre d'autres éléments permettant son bon fonctionnement, et notamment un module d'alimentation électrique, par exemple constitué par une batterie. De préférence, le pneumatique 1 comprend au moins une sonde de pression 13 adaptée pour fournir une mesure de pression intérieure du pneumatique, comme par exemple une TMS. Cette sonde 13 peut faire partie du capteur 10.

Lorsque le pneumatique 1 roule sur le sol, le capteur 10 acquiert (étape S1) le signal de mesure représentatif de l'évolution de la courbure circonférentielle du pneumatique. Ce signal de mesure peut être directement lié à la courbure (et donc être un signal de mesure de la courbure), et donc en suivre l'évolution, soit être indirectement lié à la courbure. C'est notamment le cas d'un capteur 10 dont la partie active 11 est un capteur piézoélectrique, puisque le signal de mesure correspond alors à la variation de la courbure. C'est ce type de capteur qui sera utilisé dans les exemples ci-après. Le signal de mesure, généré par la partie active 11 du capteur 10, est ensuite traité par la carte électronique 12 pour déterminer des données de mesure à partir du signal de mesure. Le traitement du signal de mesure vise à extraire les informations utiles dans ce signal, qui sont exploitées par la suite du procédé.

La Fig. 2 montre un exemple schématique d'un signal de mesure enregistré par un capteur 10 sensible à la variation de courbure du pneumatique lorsque le pneumatique 1 roule. Le signal de mesure est ici représenté par sa tension (en V), et désigné par Δcourbure, en fonction de la rotation de la roue exprimée en degré.

Lors du roulement, au cours d'un tour de roue, la courbure du pneumatique évolue selon un cycle présentant :

- une partie hors contact avec le sol,
- une partie en contact avec le sol.

La séquence illustre deux passages dans la partie en contact avec le sol de la zone du pneumatique 1 où est disposé le capteur 10, séparés par une partie de cycle hors contact avec le sol. La partie de cycle hors contact avec le sol se caractérise par une courbure stable, qui se traduit par une stabilité du signal de mesure proche du zéro. La partie du cycle en contact avec le sol se caractérise sur le signal de mesure par un pic de variation de courbure de contact 20, 30. Sur la Fig. 2, les pics de variation de courbure de contact 20, 30 sont dirigés le bas, correspondant à des pics de tension négatives. En effet, les pics de variation de courbure de contact 20, 30 correspondent à la mise à plat du pneumatique 1 dans la surface de contact 6.

La courbure présente également une transition dite transition d'entrée entre la partie hors contact avec le sol et la partie en contact avec le sol, se caractérisant sur le signal de mesure par un pic de variation de courbure d'entrée 21, 31 opposé au pic de variation de courbure de contact 20, 30, c'est-à-dire ici vers le haut. La variation de la courbure présente également une transition dite de sortie entre la partie en contact avec le sol et la partie hors contact avec le sol, se caractérisant sur le signal de mesure par un pic de variation de courbure de sortie 22, 32 opposé au pic de variation de courbure de contact, c'est-à-dire ici vers le haut. Le pic de variation de courbure d'entrée 21, 31 et le pic de variation de courbure de sortie 22, 32 correspondent aux variations brutales de rayon de courbure du pneumatique 1 en entrée et sortie de l'aire de contact.

Puisque le pneumatique 1 tourne, le même cycle se répète, avec un signal de mesure stable hors contact avec le sol, puis un pic de variation de courbure d'entrée 21, 31, un pic de variation de courbure de contact 20, 30, un pic de variation de courbure de sortie 22, 32, et enfin de nouveau un signal de mesure stable hors contact avec le sol. Ce cycle correspond à un tour de roue, donc à 360°, représenté par la longueur KT sur la Fig. 2, qui correspond à un premier paramètre KT représentatif d'une durée d'un tour de roue du pneumatique. Ce premier paramètre peut donc être déterminé à partir d'une durée entre un pic de variation de courbure de sortie 22 d'un premier tour de roue et un pic de variation de courbure de sortie 32 d'un tour de roue suivant. Ce premier paramètre KT étant représentatif d'une durée, il est typiquement exprimé en secondes (ou en des sous-multiples de la seconde).

Pour chaque cycle, le pic de variation de courbure de sortie 22, 32 présente le grand avantage d'être aigu et surtout essentiellement indépendant des conditions de sol et du pneumatique 1. En effet, le pic de variation de courbure de sortie 22, 32 correspond au changement de courbure du pneumatique 1 en sortie de la surface de contact 6, quand la zone du pneumatique 1 où est situé le capteur 10 passe brutalement de l'état plat caractéristique de la partie en contact avec le sol 7 à l'état courbe caractéristique de la partie hors contact avec le sol 7. Sur un sol meuble, au fur et à mesure qu'il roule, le pneumatique 1 compacte le sol 7 sous lui, formant une ornière, et donc un fond d'ornière assez ferme sur lequel le pneumatique 1 repose en sortie de l'aire de contact. Par ailleurs, l'avancement du véhicule 9 porte les contraintes essentiellement vers l'entrée de la surface de contact 6. Le pneumatique 1 en sortie de la surface de contact 6 présente ainsi un comportement de sortie, en termes de courbure, très proche du comportement d'un pneumatique 1 sur une route.

Ainsi, il est aisé d'identifier chaque cycle correspondant à un tour de roue, en repérant chaque pic de variation de courbure de sortie 22, 32. A partir de là, les données peuvent être exprimées en fonction de degré angulaire de chaque cycle. Cela permet notamment de pouvoir comparer les cycles et leurs données indépendamment de la vitesse du véhicule 9. De préférence, afin de rendre le procédé robuste à d'éventuels aléas ponctuels (présence d'un caillou par exemple), le procédé est mis en oeuvre en utilisant une combinaison de plusieurs cycles mesurés, par exemple avec une moyenne glissante.

Le glissement et l'état de fermeté du sol 7 influence les caractéristiques du profil du signal de mesure. L'invention vise donc à extraire des paramètres du signal de mesure pour en déduire le glissement, en fonction de l'état de fermeté du sol 7. Le procédé comprend donc la détermination (étape S2), à partir du signal de mesure de données de mesure comprenant au moins un premier paramètre KT représentatif d'une durée d'un tour de roue du pneumatique. Les données de mesure peuvent comprendre d'autres paramètres ou valeurs dérivées du signal de mesure. De préférence, les données de mesure comprennent également un deuxième paramètre KL représentatif d'une longueur d'une surface de contact 6 avec le sol 7 lors d'un tour de roue du pneumatique, et un troisième paramètre KS représentatif d'une vitesse de mise à plat du pneumatique 1 lors du contact avec le sol 7 lors d'un tour de roue du pneumatique 1.

Le deuxième paramètre KL est déterminé à partir d'une partie du signal de mesure correspondant à la partie en contact avec le sol. Plus précisément, le deuxième paramètre KL est déterminé à partir d'une distance entre le pic de variation de courbure d'entrée 31, et le pic de variation de courbure de sortie 32. S'agissant de deux maximums locaux dans le cycle, il est aisé d'identifier le sommet de chaque pic et d'en déduire leur distance, exprimée en degré. Comme le pic de variation de courbure d'entrée 31 et le pic de variation de courbure de sortie 32 correspondent respectivement au début et à la fin de la partie en contact avec le sol, le deuxième paramètre KL est bien fonction de l'aire du pneumatique 1 en contact avec le sol. De fait, le deuxième paramètre KL correspond à la longueur de la surface de contact 6. Dans l'exemple, le signal de mesure s'exprimant en volt V en fonction des degrés angulaires °, le deuxième paramètre KL peut être exprimé en degré angulaire.

Le troisième paramètre KS est déterminé à partir d'une partie du signal de mesure correspondant à une transition de la courbure du pneumatique entre la partie hors contact avec le sol et la partie en contact avec le sol. Plus précisément, le troisième paramètre KS est déterminé par une pente entre le pic de variation de courbure d'entrée 31 et le pic de variation de courbure de contact 30. Encore plus précisément, le troisième paramètre KS peut correspondre à la variation maximale de la variation de la courbure entre le pic de variation de courbure d'entrée 31 et le pic de variation de courbure de contact 30, c'est-à-dire correspondre à la pente maximale. Dans l'exemple, le signal de mesure s'exprimant en volt V en fonction des degrés angulaires °, le troisième paramètre KS peut avoir pour unité des V/°, c'est-à-dire correspondant à la dérivée seconde de la courbure du pneumatique 1.

Le troisième paramètre KS peut être approximé de plusieurs façons. Par exemple, le troisième paramètre KS peut correspondre au maximum (au sens de la valeur absolue) de la dérivée du signal de mesure entre le pic de variation de courbure d'entrée 31 et le pic de variation de courbure de contact 30, la dérivée étant estimée à partir de la différence entre deux points de mesure successifs (ou proches), en prenant évidemment en compte leur éloignement angulaire. S'agissant dans l'exemple d'une pente décroissante, ce maximum au sens de la valeur absolue correspond à un minimum de la dérivée du signal de mesure entre le pic de variation de courbure d'entrée 31 et le pic de variation de courbure de contact 30. Il est également possible, au lieu de rechercher une valeur extrémale de dérivée, de choisir des points de mesure fixes, comme par exemple ceux situés à équidistance des sommets du pic de variation de courbure d'entrée 31 et du pic de variation de courbure de contact 30, et de calculer la dérivée à partir de ces points. On peut encore prendre les points de mesure correspondant à une valeur de signal de mesure, comme par exemple le passage au zéro dans le cas illustré. Il est encore possible d'utiliser des approches plus complexes, comme par exemple l'algorithme de Savitzky-Golay. Toutefois, le choix d'une fréquence d'échantillonnage relativement faible, typiquement inférieure ou égale à 500 Hz, et de préférence inférieure ou égale à 400 Hz, comme les 300 Hz de l'exemple, revient à lisser le signal de mesure et permet de choisir des approches moins lourdes en calcul, tel que celles présentées plus haut.

Le deuxième paramètre KL et le troisième paramètre KS ont l'avantage de présenter une grande variabilité en fonction de la fermeté du sol, et d'être facilement obtenus, comme démontré ci-dessus. Plus précisément, lorsque la fermeté du sol diminue, le deuxième paramètre KL augmente tandis que le troisième paramètre KS diminue. Ainsi, plus le sol est meuble, plus la longueur de la surface de contact 6 avec le sol 7 (représentée par le deuxième paramètre KL) augmente, tandis que la vitesse de mise à plat (représentée par le troisième paramètre KS) diminue. A l'inverse, lorsque la fermeté du sol 7 augmente, le deuxième paramètre KL diminue tandis que et le troisième paramètre KS augmente.

La connaissance de la fermeté du sol 7 peut être fournie directement sous la forme d'un facteur de fermeté, dérivé par ailleurs de mesures (par exemple par le capteur 10 ou par d'autres capteurs) effectuées pendant que le pneumatique roule sur ledit sol. Il est par exemple possible de mettre en oeuvre une méthode d'évaluation de la fermeté d'un sol 7 sur lequel roule un véhicule ayant au moins un pneumatique monté présentant une rigidité radiale $k_{radial}$ comprenant une enveloppe pneumatique ayant un sommet 3, deux flancs 4 et deux bourrelets, équipée d'au moins un capteur 10 sensible à la courbure circonférentielle positionné au droit du sommet, comprenant les étapes suivantes :

- estimer une valeur de courbure $\rho_A$ de l'enveloppe pneumatique correspondant à un premier régime permanent de l'enveloppe pneumatique en contact avec le sol 7;
- évaluer la fermeté relative du sol 7 par rapport à la rigidité radiale $k_{radial}$ de l'ensemble monté comme une fonction de la valeur de courbure $\rho_A$ de l'enveloppe pneumatique.

Cette méthode d'évaluation de la fermeté d'un sol peut comprendre aussi les étapes suivantes :

- estimer une valeur de courbure $\rho_B$ de l'enveloppe pneumatique correspondant à un second régime permanent de l'enveloppe pneumatique hors du contact avec le sol ;
- évaluer la fermeté relative du sol par rapport à la rigidité radiale kradial de l'ensemble monté comme une fonction de la valeur de courbure $\rho_A$ dans le premier régime permanent et de la valeur de courbure $\rho B$ de l'enveloppe pneumatique dans le second régime permanent.

Plus précisément, la méthode d'évaluation de la fermeté d'un sol comprend les étapes suivantes :

- établir la courbure relative C comme le rapport $\rho_A/\rho_B$ ;
- évaluer la fermeté relative du sol par rapport à la rigidité radiale $k_{radial}$ de l'ensemble monté comme une fonction de la courbure relative C.

En particulier, le lien entre la fermeté relative du sol par rapport à la rigidité radiale $k_{radial}$ de l'ensemble monté peut être donné par la formule suivante :

$$\frac{k_{sol}}{k_{radial}} = \frac{|1 + \alpha * C - (1 + \alpha) * C^2|}{\beta * C}$$

dans laquelle $\beta$ est une fonction polynomiale de la pression interne de gonflage P de l'ensemble monté du type suivant : $\beta = \beta_1 * (P)^{\beta_2}$. Les coefficients $\alpha$, $\beta_1$ et $\beta_2$ sont des coefficients dépendants du pneumatique 1 monté.

Il est également possible de déterminer la fermeté du sol à partir du deuxième paramètre KL et du troisième paramètre KS. Pris individuellement, le deuxième paramètre KL et/ou le troisième paramètre KS peuvent dépendre en outre de la charge, de la pression, et/ou de la vitesse. Toutefois, la prise en compte à la fois du deuxième paramètre KL et du troisième paramètre KS permet de déterminer la fermeté du sol à partir de ces seuls paramètres, sans connaître la charge, la pression, la vitesse, et le glissement du pneumatique 1 sur le sol.

De préférence, c'est la carte électronique 12 du capteur 10 qui détermine à partir du signal de mesure les données de mesure comprenant le deuxième paramètre KL et le troisième paramètre KS. Ces données de mesure sont ensuite transmises par le capteur 10 à une unité de traitement de données 15 qui met en oeuvre la suite du procédé. Cette unité de traitement de données 15 est de préférence disposée à l'extérieur du pneumatique 1, par exemple dans le véhicule 9 mais l'unité de traitement 15 peut également être distante du véhicule 9, et la transmission des données peut alors faire intervenir des moyens de transmission intermédiaires. La transmission des données de mesure entre le capteur 10 et l'unité de traitement de données 15 se fait alors de manière sans fil. L'unité de traitement de données 15 comprend typiquement un processeur et une mémoire, et est adaptée pour recevoir et pour traiter les données de mesure lors de la mise en oeuvre de la suite du procédé de la détermination du glissement du pneumatique et éventuellement la fermeté du sol. L'unité de traitement de données 15 est également configurée pour recevoir une mesure de vitesse de translation du véhicule par rapport au sol. L'unité de traitement de données 15 est également configurée pour obtenir un facteur de fermeté représentatif d'un état de fermeté du sol, dérivé de mesures effectuées pendant que le pneumatique roule sur ledit sol. Ce facteur de fermeté peut être reçu par l'unité de traitement 15 ou bien peut être déterminé à partir des données de mesure.

Il est possible de transmettre le signal de mesure à l'unité de traitement 15 pour la mise en oeuvre de la suite du procédé, l'unité de traitement 15 déterminant alors détermination les données de mesure à partir du signal de mesure. Toutefois, la détermination des données de mesure par le capteur 10 et la transmission de ces seules données de mesure vers l'unité de traitement de données 15 présente l'avantage de réduire la quantité de données transmises entre le capteur 10 et l'unité de traitement de données 15. La transmission de données consommant beaucoup d'énergie, transmettre les données de mesure plutôt que le signal de mesure permet de limiter la consommation électrique du capteur 10, dont les possibilités d'alimentation dans le pneumatique 1 sont limitées.

Il est par ailleurs avantageux de ne pas utiliser la carte électronique 12 du capteur 10 pour la mise en oeuvre de la suite du procédé, mais plutôt d'utiliser l'unité de traitement de données 15 pour traiter les données de mesure. On limite ainsi les calculs effectués par la carte électronique 12 du capteur 10, ce qui permet d'économiser de l'énergie et de la mémoire au niveau de la carte électronique 12. De plus, il est plus aisé de modifier les modalités de mise en oeuvre de la suite du procédé sur une unité de traitement de données 15 facilement accessible, plutôt que sur le capteur 10 à l'intérieur du pneumatique 1.

L'unité de traitement de données 15 obtient également (étape S3) une mesure de la vitesse de translation du véhicule par rapport au sol. Cette mesure de la vitesse de translation du véhicule par rapport au sol est typiquement déterminée par un récepteur d'un système de positionnement par satellite (comme par exemple le système GPS, GLONASS ou Galileo) et transmise à l'unité de traitement 15. Il est cependant possible d'utiliser d'autres façon de mesurer la vitesse de translation du véhicule par rapport au sol, comme par exemple avec un radar ou des accéléromètres. Il est possible que l'unité de traitement 15 ne reçoive que des données de position successives, et que ce soit l'unité de traitement 15 qui détermine la mesure de la vitesse de translation du véhicule par rapport au sol. Il est bien entendu que cette obtention de la mesure de la vitesse de translation du véhicule par rapport au sol se fait généralement de façon continue.

Une fois que l'unité de traitement 15 a obtenu les données de mesure et la mesure de la vitesse de translation du véhicule par rapport au sol l'unité de traitement 15 peut déterminer, en fonction d'un facteur de fermeté représentatif d'un état de fermeté du sol 7 :

- soit la circonférence de roulement du pneumatique 1 (étape S5) en fonction du paramètre KT représentatif d'une durée d'un tour de roue du pneumatique 1, et de la vitesse de translation du véhicule par rapport au sol 7,
- soit le glissement du pneumatique 1 (étape S6) en fonction du paramètre KT représentatif d'une durée d'un tour de roue du pneumatique 1, de la vitesse de translation du véhicule par rapport au sol 7, et d'une circonférence de roulement du pneumatique 1 précédemment déterminée.

Ainsi, les étapes du procédé dépendent notamment du facteur de fermeté pris en compte. Préalablement, si le facteur de fermeté n'est pas fourni, il est possible de déterminer la fermeté du sol 7 en fonction du deuxième paramètre KL et du troisième paramètre KS contenus dans les données de mesure, qui varient en fonction de la fermeté du sol 7, comme montré ci-dessous.

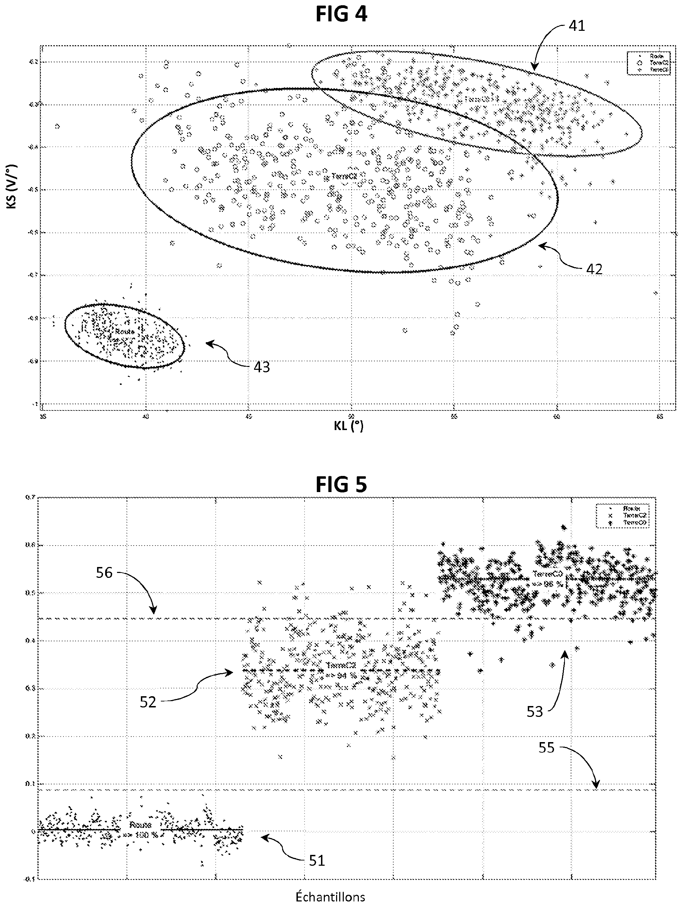

La Fig. 4 un exemple d'analyse statistique en deux dimensions selon les deux paramètres KL et KS dérivés du signal de mesure pour un pneumatique 1 d'un véhicule 9 roulant sur un sol 7 dont la fermeté est connue. Dans cet exemple, les données de mesure dérivent d'un signal de mesure acquis par un capteur 10 piézoélectrique disposé dans un pneumatique avant d'un tracteur agricole lors d'un roulement sur un même sol présentant trois configurations de fermeté différentes :

- C0 (sol très meuble) : terre brute de labourage suivie d'un hersage,
- C2 (sol assez meuble) : terre brute de labourage suivie d'un hersage compactée deux fois par le passage d'un pneumatique 1 (par les roues avant et arrière d'un véhicule 9, correspondant donc à un passage de véhicule 9),
- route (sol dur) : surface bitumée.

Il est à noter que les points de mesure regroupent des charges, des pressions et des vitesses (inférieures à 20 km/h) variées.

Les points de mesure sont exprimés en fonction du deuxième paramètre KL (en abscisse et en degré angulaire) et du troisième paramètre KS (en ordonnée et en V/°). Ces valeurs dépendent évidemment du type de pneumatique 1 et du capteur 10 utilisés. Les croix correspondent à un roulement sursol très meuble C0, et sont regroupées dans un premier ellipsoïde de confiance 41 à 95%. Les cercles correspondent à un roulement sur sol assez meuble C2, et sont regroupés dans un deuxième ellipsoïde de confiance 42 à 95%. Les points correspondent à des points de mesure lorsque roulement sur une route (sol très ferme), et sont regroupés dans un troisième ellipsoïde de confiance 43 à 95%. Les exemples de la Fig. 4 donnent ainsi une indication sur les grandeurs prises par les paramètres KL et KS. Par exemple, sur route, le troisième paramètre KS est compris entre -0,7 V/° et -1 V/°, tandis que le deuxième paramètre KL est compris entre 35° et 43°.

On constate que le troisième ellipsoïde de confiance 43 est nettement séparé des deux autres. Les deux paramètres KL et KS permettent donc d'identifier facilement un sol très dur tel que la route. On constate également que si le premier ellipsoïde de confiance 41 et le second ellipsoïde de confiance 42 se recouvrent un peu, ils sont néanmoins très suffisamment disjoints pout permettre de distinguer un point de mesure avec un sol C0 d'un point de mesure avec un sol C2. Ainsi, la prise en compte combinées des paramètres KL et KS permet d'identifier l'état de fermeté du sol, malgré des charges, des pressions et des vitesses variées.

Plus précisément, les données de mesure comprenant les paramètres KL et KS sont utilisées pour analyser le signal de mesure afin de déterminer à quelle classe de fermeté appartient le sol sur lequel roule le pneumatique 1. L'utilisation de classes permet de faciliter et de simplifier l'éventuel retour d'information au conducteur ou l'exploitation par un système automatisé, tout en gommant des fluctuations et imprécisions de mesure. L'utilisation de classe de fermeté n'est pas obligatoire, puisqu'il est possible d'exprimer la fermeté au moyen d'une grandeur numérique, comme par exemple un pourcentage, mais il s'agit cependant du mode de réalisation préférentiel qui est présenté ci-dessous.

A titre d'exemple illustratif et non limitatif, les classes suivantes peuvent être utilisées

[Table 1]

| Classe | D0 | D1 | D2 | D3 | D4 | D5 |
|---|---|---|---|---|---|---|
| Etat de fermeté | Très meuble | Meuble | Semi-meuble | Semi-dur | Dur | Très dur |
| Exemple | Terre C0 | Terre C1 | Terre C2 ou C3 | herbe | chemin | route |

Dans ce tableau, terre C0 est la terre brute de labourage suivie d'un hersage, terre C1 est la terre C0 compactée par un passage de roue (uniquement par la roue avant), terre C2 est la terre C0 compactée par deux passages de roue (par la roue avant et par la roue arrière), terre C3 est la terre C0 compactée par trois passages de roue (par la roue avant, par la roue arrière, puis encore par la roue avant). Il est à noter que les terres C2 et C3 (et éventuellement suivantes) sont regroupés dans la même classe car la terre arrive très vite à sa compacité maximale au passage d'un véhicule 9. Ces classes présentent l'avantage de rendre compte des effets respectifs sur la fermeté du sol du passage des roues avant et des roues arrière. Bien entendu, d'autres classes pourraient être utilisées. Il serait par exemple possible d'utiliser des classes encore plus meubles, par exemple représentative d'un sol très meuble boueux, voire avec un défaut de portance.

La fermeté du sol est donc déterminée en utilisant une relation liant la fermeté du sol, le deuxième paramètre KL et le troisième paramètre KS. Ainsi, après avoir été déterminés, le deuxième paramètre KL et le troisième paramètre KS sont utilisés pour déterminer un facteur de fermeté au moyen de cette relation. Ainsi, en notant F le facteur de fermeté, et $f_F$ une fonction correspondant à la relation et portant sur le deuxième paramètre KL et le troisième paramètre KS, on peut écrire :

$$F = f_F(KL, KS)$$

De préférence, cette relation est une relation linéaire. Plus précisément, la relation linéaire peut être de la forme :

$$F = a + b \times KL + c \times KS$$

avec F le facteur de fermeté, KL le deuxième paramètre, KS le troisième paramètre, et a, b, c des coefficients réels non nuls fixes préalablement déterminés. La relation peut être bilinéaire, et donc être du type :

$$F = a + b \times KL + c \times KS + m \times \mathrm{KL} \times \mathrm{KS}$$

avec a, b, c, et m des coefficients réels non nuls fixes préalablement déterminés.

Il est à noter que la relation liant la fermeté du sol, le deuxième paramètre KL et le troisième paramètre KS peut bien évidemment prendre en compte d'autres paramètres, et en particulier peut prendre en compte la pression d'un pneumatique, la vitesse, ou encore le premier paramètre KT.

Les coefficients fixes a, b, c, et m sont de préférence choisis afin de maximiser la discrimination de classes de fermeté du sol. On peut par exemple utiliser une analyse discriminante à une dimension. Cette analyse discriminante vise à maximiser les écarts entre les centres de gravité de chacune des classes de fermeté du sol, tout en minimisant la dispersion intra-classe.

La Fig. 5 montre un exemple d'analyse discriminante en une dimension pour un pneumatique 1 avant d'un véhicule 9, pour les mêmes données que celles de la Fig. 4. Les échantillons (1388 exactement) sont regroupés par configuration de roulement selon l'axe des abscisses, tandis que l'axe des ordonnées correspond à l'axe discriminant. Les points de mesure ont été relevés avec trois configurations différentes d'état de fermeté. Un premier ensemble 51 de points de mesure regroupe les points de mesure relevés sur route, un deuxième ensemble 52 de points de mesure regroupe les points de mesure relevés sur une terre très meuble, correspondant à la configuration terre C0, un troisième ensemble 53 de points de mesure regroupe les points de mesure relevés sur une terre semi-meuble, correspondant à la configuration terre C2. L'analyse discriminante sur les paramètres KL et KS consiste à combiner ces deux paramètres pour en déduire un troisième qui correspond à un facteur de fermeté $F_{AD}$, qui correspond à l'ordonnée de chaque point de mesure. La relation est alors la suivante :

$$F_{AD} = 0{,}012516 \times KL + 0{,}57576 \times KS$$

En référence à la formule générale donnée plus haut, on a donc a=0, b=0,012516, et c=0,57576. Les valeurs des coefficients fixes dépendent bien évidemment du type de pneumatique, du capteur 10 utilisé, de sa disposition sur le pneumatique avant ou arrière, et des configurations de sol utilisées pour recueillir les données.

L'analyse discriminante permet de déterminer des seuils de classification séparant les différentes classes. Dans l'exemple de la Fig. 5, les seuils résultants sont représentés par des lignes horizontales en pointillés. Ainsi, une première ligne 55 départage la classe "route" de la classe "terre C2", avec un seuil de classification à 0,088066. Une seconde ligne 56 départage la classe "terre C2" de la classe "terre C0" avec un seuil de classification à 0,44572.

Ainsi, après avoir été déterminés, le deuxième paramètre KL et le troisième paramètre KS sont utilisés pour déterminer un facteur de fermeté, et la classe de fermeté sur sol est déterminée en comparant ce facteur de fermeté à des seuils de classification. Dans cet exemple, la probabilité moyenne de détection correcte des trois classes (route, terre C2 et terre C0), monte à 97%, se répartissant comme suit :

- 100 % pour la classe route,
- 94% pour la classe terre C2,
- 96% pour la classe terre C0.

On obtient ainsi une excellente correspondance entre les classes de fermeté déterminées par le procédé et la fermeté réelle des configurations de sol des points de mesure.

Il est à noter que le comportement d'un pneumatique 1 monté à l'avant d'un véhicule 9 diffère du comportement d'un pneumatique 1 monté à l'arrière du véhicule 9, essentiellement à cause des dimensions respectives différentes d'un pneumatique 1 avant et d'un pneumatique 1 arrière, mais également en raison du tassement de la terre par le pneumatique 1 avant, renforçant la fermeté du sol sur lequel roule un pneumatique 1 arrière. Par conséquent, la relation liant la fermeté du sol, le deuxième paramètre KL et le troisième paramètre KS peut être différente pour un pneumatique 1 avant et pour un pneumatique arrière. De préférence, le capteur 10 est placé dans un pneumatique 1 avant, rendant mieux compte de la fermeté effective du sol tel qu'il se présente avant d'être tassé par le roulement d'un pneumatique 1. Ainsi, avec la relation linéaire exprimée plus haut, les coefficients fixes a, b, c peuvent être différents en fonction de la position du capteur 10 dans un pneumatique 1 avant ou dans un pneumatique 1 arrière. De préférence encore, un capteur 10 est placé dans un pneumatique 1 avant et un autre capteur 10 est placé dans le pneumatique arrière qui suit ledit pneumatique avant (c'est-à-dire généralement du même côté du véhicule 9). Il est alors possible d'avoir deux relations linéaires, l'une pour le pneumatique avant et l'autre pour le pneumatique arrière :

$$\begin{cases} F_{AV} = a_{AV} + b_{AV} \times KL_{AV} + c_{AV} \times KS_{AV} \\ F_{AR} = a_{AR} + b_{AR} \times KL_{AR} + c_{AR} \times KS_{AR} \end{cases}$$

avec $F_{AV}$ la fermeté déterminée à partir des données de mesure du pneumatique avant, $KL_{AV}$ le deuxième paramètre pour le pneumatique avant, $KS_{AV}$ le troisième paramètre pour le pneumatique avant, et $a_{AV}$, $b_{AV}$, cav des coefficients fixes préalablement déterminés pour le pneumatique avant, et avec $F_{AR}$ la fermeté déterminée à partir des données de mesure du pneumatique arrière, $KL_{AR}$ le deuxième paramètre pour le pneumatique arrière, $KS_{AR}$ le troisième paramètre pour le pneumatique arrière, et $a_{AR}$, $b_{AR}$, $c_{AR}$ des coefficients fixes préalablement déterminés pour le pneumatique arrière.

A titre d'exemple, on peut avoir les deux relations suivantes :

$$\begin{cases} F_{AV} = 0{,}012516 \times KL_{AV} + 0{,}57576 \times KS_{AV} \\ F_{AR} = 0{,}011622 \times KL_{AR} + 1{,}2213 \times KS_{AR} \end{cases}$$

Dans la mesure où les fermetés vues par le pneumatique avant et par le pneumatique arrière dérivent d'analyses discriminantes différentes, $F_{AV}$ et $F_{AR}$ ne sont pas directement sur les mêmes échelles. Il est cependant préférable de pouvoir comparer et exploiter en commun les fermetés déterminées à partir du pneumatique avant et du pneumatique arrière, en trouvant une échelle commune pour l'expression de ces deux fermetés. La classe "route" peut être choisi comme référence commune, dans la mesure où elle apparaît comme peu dispersée, ce qui permet de déterminer les transformations pour recaler les échelles. Il s'agit simplement de modifier les coefficients fixes a, b et c respectifs des deux relations.

On peut en outre exprimer ces fermetés en fonction de l'étalement des mesures : la fermeté la plus élevée des points de mesure peut alors correspondre à un extrême d'une échelle, tandis que la fermeté la plus basse des points de mesure peut alors correspondre à l'autre extrême de l'échelle. On peut par exemple utiliser des pourcentages pour exprimer la fermeté, avec 100% pour le facteur de fermeté le plus élevé et 0% pour le facteur de fermeté le plus faible. Là encore, il s'agit simplement de modifier les coefficients fixes non nuls a, b et c respectifs des deux relations.

En reprenant l'exemple des deux relations données plus haut, ces deux relations peuvent exprimer un facteur de fermeté en pourcentage, sur une même échelle :

$$\begin{cases} F(\%) = 90{,}03840 - 1{,}59822 \times KL_{AV} - 73{,}58853 \times KS_{AV} \\ F(\%) = 62{,}80775 - 1{,}48666 \times KL_{AR} - 156{,}23955 \times KS_{AR} \end{cases}$$

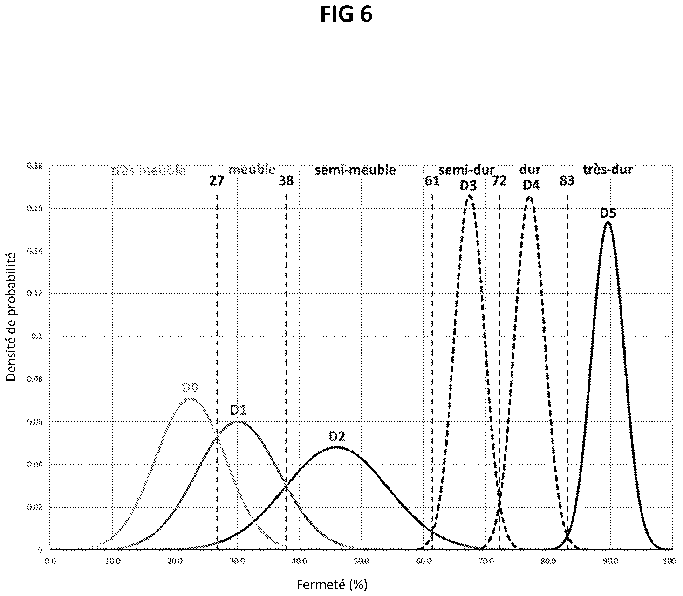

A titre d'exemple, la Fig. 6 monte une classification de la fermeté des sols en pourcentage selon les six classes du tableau Table 1, avec les seuils de classification représentés par des lignes verticales en tirets, et les indications des densités de probabilités pour chaque classe avec une modélisation par une loi normale. On peut ainsi compléter le tableau Table 1 avec les seuils correspondants, pour donner le tableau suivant :

[Table 2]

| Classe | D0 | D1 | D2 | D3 | D4 | D5 |
|---|---|---|---|---|---|---|
| Etat de fermeté | Très meuble | Meuble | Semi-meuble | Semi-dur | Dur | Très dur |
| Étendue | 0 à 27% | 27 à 38% | 38 à 61% | 61 à 72% | 72 à 83% | 83 à 100% |
| Exemple | Terre C0 | Terre C1 | Terre C2 ou C3 | Herbe | Chemin | Route |

Ces classes sont préalablement déterminées, et stockées dans la mémoire de l'unité de traitement 15, qui stocke également la relation liant la fermeté du sol, le deuxième paramètre KL et le troisième paramètre KS. Les classes peuvent être utilisées par l'unité de traitement 15 pour traiter les données de mesure pour le pneumatique 1 et le capteur 10 correspondant, afin de déterminer la classe de fermeté du sol sur lequel roule le pneumatique 1. Par exemple, si le facteur de fermeté (en pourcentage) F(%) calculé pour un couple de deuxième paramètre KL et de troisième paramètre KS issus du signal de mesure est de 92%, cela signifie que le pneumatique 1 roule sur un sol très dur, comme une route, appartenant à la classe D5.

La connaissance de la fermeté présente de nombreux avantages. Par exemple, en présence d'un sol meuble, la pression de gonflage d'un pneumatique peut être baissée afin d'élargir l'aire de contact entre le pneumatique et le sol, afin de limiter le tassement de celui-ci. Par ailleurs, la détermination locale de la fermeté du sol permet d'évaluer l'opportunité de mener ou non certaines opérations dépendantes de cet état de fermeté. Par exemple, le passage d'un engin dans une terre trop meuble peut dégrader le sol ou causer l'enlisement de l'engin. Le travail de la terre peut aussi être affecté par l'état de fermeté du sol.

En couplant des états de fermeté avec des données géolocalisations synchrones, il est possible d'établir une cartographie de la fermeté du sol d'une parcelle, éventuellement couplée avec d'autres caractéristiques du sol. Une telle cartographie peut s'avérer utilise pour déterminer un aménagement du sol de la parcelle, comme par exemple la mise en place d'un drainage du sol ou un empierrement de celui-ci.

Des mesures appropriées peuvent alors être prises en fonction de la fermeté ainsi déterminée. Par exemple, dans le cas d'un tracteur agricole avec une transmission intégrale sans différentiel central, le pont avant peut être débrayé afin d'éviter l'usure sur un sol dur. A l'inverse, il est également possible par exemple de réduire la pression des pneumatiques lorsque le sol est très meuble, afin de limiter le marquage de celui-ci ou de réduire le risque d'enfouissement des roues, voire d'immobilisation du véhicule 9.

Ces mesures peuvent être commandées par l'unité de traitement de données 15 qui a déterminé la fermeté du sol, notamment lorsqu'il s'agit d'une unité de commande centrale du véhicule 9, ou qui l'a reçue. Une fois la fermeté obtenue (étape S4), par la fourniture d'un facteur de fermeté ou par la détermination de ce facteur de fermeté comme décrit ci-dessus, il est possible de déterminer soit la circonférence de roulement du pneumatique 1 dans le cas d'un sol 7 ferme (étape S5), soit le glissement du pneumatique 1 dans le cas d'un sol 7 peu ferme (étape S6) comme décrit ci-dessous. Les étapes mises en oeuvre dépendent donc de l'état de fermeté du sol 7. La distinction entre un sol ferme et un sol peu ferme est aisée à faire pour un homme du métier : sur un sol ferme, le glissement est absent ou peut être considéré comme négligeable, tandis que sur un sol peu ferme, le pneumatique est susceptible de présenter du glissement.

Par exemple, il peut être raisonnablement considéré qu'un pneumatique d'un véhicule 9 roulant sur une route n'imposant aucun effort important au véhicule, par exemple une route présentant une pente négligeable ou faible (dans l'exemple ci-dessus, classe D5, classe de fermeté "Très dur" avec un facteur de fermeté compris entre 83 et 100%) ne présente pas de glissement, ou en tout cas que celui-ci est négligeable (inférieur à 5%). En revanche, un pneumatique 1 d'un véhicule 9 roulant sur une terre très meuble, comme par exemple une terre brute de labourage suivie d'un hersage (classe D0, avec un facteur de fermeté de 0 à 27%) est susceptible de présenter un glissement non négligeable (supérieur à 5%), d'autant plus si le véhicule 9 tracte un outil ou une remorque, ou si la terre est humide, ces conditions étant plus fréquemment présentes qu'absentes.

En reprenant l'exemple exposé plus haut et notamment la classification illustrée par le tableau 2 et la Fig. 6, il est par exemple possible de considérer que les classe D3, D4 et D5 (facteur de fermeté strictement supérieur à 61%) correspondent à un sol ferme sur lequel le glissement est négligeable, tandis que les classe D0, D1 et D2 (facteur de fermeté inférieur à 61%) peuvent correspondre à un sol peu ferme sur lequel le pneumatique est susceptible de présenter un glissement. On voit ainsi qu'il suffit de définir un seuil au-delà duquel le facteur de fermeté est représentatif d'un sol ferme, et en-deçà duquel le facteur de fermeté est représentatif d'un sol peu ferme.

Comme explique plus bas, la détermination d'une circonférence de roulement du pneumatique 1 mise en oeuvre lorsque le facteur de fermeté est représentatif d'un sol ferme sert à calibrer la détermination du glissement du pneumatique mise en oeuvre lorsque le facteur de fermeté est représentatif d'un sol peu ferme. Il est donc préférable que le sol considéré comme ferme présente une fermeté très élevée, afin de permettre une bonne calibration et d'élargir la mise en oeuvre de la détermination du glissement à des sols présentant une fermeté élevée. Typiquement, un sol ferme correspond au sol 7 tel qu'une route bitumée ou un chemin de terre, sur lequel roule un véhicule 9 se rendant sur un lieu de travail, tandis qu'un sol peu ferme correspond au sol 7 sur lequel travaille le véhicule, comme par exemple la terre d'un champ plus ou moins travaillée (par exemple fraîchement labourée, avec éventuellement des compactages dus aux passages de roues), voire un espace enherbé. On peut ainsi calibrer la détermination du glissement à chaque fois que le véhicule 9 entreprend un travail, puisqu'il passe généralement par un sol très ferme (route ou chemin) pour s'y rendre. Par conséquent, le seuil de distinction entre un sol ferme et un sol peu ferme se situe au-delà du milieu (50%) de l'étendue de variation du facteur de fermeté, et de préférence au-delà des deux tiers (66%) de cette étendue, et de préférence encore au-delà des trois quarts (75%) de cette étendue.

Dans le cas où le sol 7 sur lequel roule le pneumatique 1 est considéré comme ferme, le glissement est inexistant, ou au moins très faible, et peut être négligé. La vitesse de rotation de la roue correspond à la vitesse de translation du véhicule 9, moyennant la conversion entre la vitesse de rotation et la vitesse de translation, qui fait intervenir la circonférence de roulement du pneumatique 1. Il existe alors une relation linéaire simple entre la circonférence de roulement $C_r$ du pneumatique 1, le premier paramètre représentatif d'une durée d'un tour de roue du pneumatique et la vitesse de translation du véhicule 9, qui peut être exprimée sous la forme :

$$C_r = Z \times KT \times V_v$$

avec KT le paramètre représentatif d'une durée d'un tour de roue du pneumatique, $V_v$ la vitesse de translation du véhicule 9 par rapport au sol 7, et Z un facteur de conversion des unités. Le facteur de conversion est par exemple de 3,6 lorsque le premier paramètre KT est exprimé en secondes, la vitesse de translation $V_v$ en kilomètres par heure et la circonférence de roulement $C_r$ en mètres. La valeur du facteur de conversion Z peut évidemment varier en fonction des unités utilisées.

Ainsi, en connaissant le premier paramètre KT et la vitesse de translation du véhicule 9 par rapport au sol 7, l'unité de traitement 15 détermine facilement la circonférence de roulement $C_r$ du pneumatique 1, notamment dans des conditions où le glissement est négligeable, grâce à la formule ci-dessus. Cette circonférence de roulement $C_r$ peut varier essentiellement d'un pneumatique 1 à l'autre, mais elle varie également pour un même pneumatique 1 en fonction notamment de la charge s'exerçant sur le pneumatique 1 et de la pression interne du pneumatique 1.

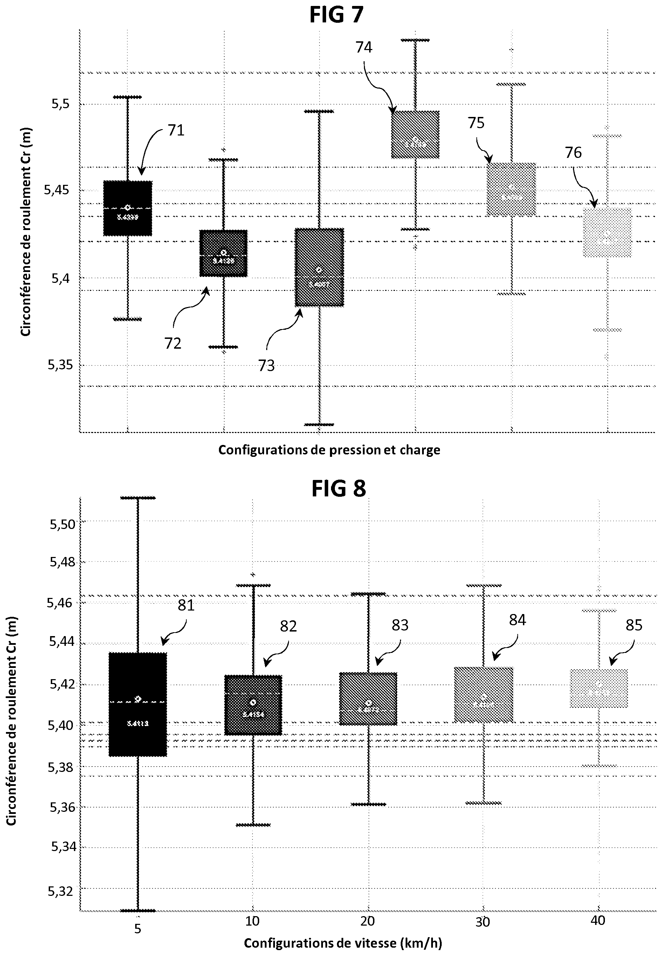

La Fig. 7 montre des exemples statistiques d'effets de pression et de charge sur la circonférence de roulement sur une route, toutes vitesses confondues, pour un pneumatique arrière d'un tracteur agricole. Un premier diagramme en boîte 71 montre la répartition statistique de circonférences de roulement $C_r$ à une pression de 1,2 bar et une charge de 2 245 daN. On obtient une valeur médiane de 5,4399 m. Un second diagramme en boîte 72 montre la répartition statistique de circonférences de roulement à une pression de 1,2 bar et une charge de 2 890 daN. On obtient une valeur médiane de 5,4126 m, avec une répartition nettement plus basse que pour le premier diagramme en boîte 71. L'augmentation de la charge a donc réduit la circonférence de roulement. Un troisième diagramme en boîte 73 montre la répartition statistique de circonférences de roulement $C_r$ à une pression de 1,2 bar et une charge de 3 575 daN. On obtient une valeur médiane de 5,4007 m, avec une répartition globalement plus basse que pour le premier diagramme en boîte 71 et le deuxième diagramme en boîte 72, néanmoins avec une répartition plus étendue.

Un quatrième diagramme en boîte 74 montre la répartition statistique de circonférences de roulement à une pression de 1,6 bar et une charge de 2 245 daN. On obtient une valeur médiane de 5,4789 m, avec une répartition nettement plus haute que pour le premier diagramme en boîte 71. Par rapport au premier diagramme en boîte 71, l'augmentation de la pression interne dans le pneumatique a clairement fait augmenter la circonférence de roulement. Un cinquième diagramme en boîte 75 montre la répartition statistique de circonférences de roulement à une pression de 1,6 bar et une charge de 2 890 daN. On obtient une valeur médiane de 5,4509 m, avec une répartition nettement plus basse que pour le quatrième diagramme en boîte 74, qui confirme que la circonférence de roulement baisse lorsque la charge augmente. Par rapport au deuxième diagramme en boîte 72, l'augmentation de la pression interne dans le pneumatique 1 a clairement fait augmenter la circonférence de roulement. Un sixième diagramme en boîte 76 montre la répartition statistique de circonférences de roulement à une pression de 1,6 bar et une charge de 3 575 daN. On obtient une valeur médiane de 5,4247 m, avec une répartition nettement plus basse que pour le cinquième diagramme en boîte 75 et plus élevée que pour le troisième diagramme en boîte 73.

La Fig. 8 montre des exemples d'effet de la vitesse sur la circonférence de roulement sur une route pour une pression interne de 1,2 bar et une charge de 2890 daN, pour un pneumatique arrière d'un tracteur agricole. Un premier diagramme en boîte 81, 82, 83, 84 et 85 montre la répartition statistique de circonférences de roulement pour des vitesses de translation de 5 km/h, 10 km/h, 20 km/h, 30 km/h, et 40 km/h, respectivement, donnant des valeurs médianes de 5,4113 m, 5,4154 m, 5,4072 m, 5,4106 m, et 5,4149 m, respectivement. Il apparaît que la vitesse n'a que peu d'impact sur la valeur médiane de la circonférence de roulement. Il est à noter que les configurations illustrées dans la Fig. 8 sont regroupées dans la configuration illustré par le deuxième diagramme en boîte 72 de la Fig. 7 avec une valeur médiane de 5,4126 m, montrant encore le peu d'impact de la vitesse la circonférence de roulement. Il apparaît cependant sur la Fig. 8 que l'augmentation de la vitesse permet de réduire la dispersion des mesures de la circonférence de roulement. Dans la mesure où un véhicule roule beaucoup plus vite sur la route ou un chemin que dans le champ où il travaille, la détermination de la circonférence de roulement se fait donc avec une précision élevée.

La Fig. 7 montre que la circonférence de roulement varie en fonction des configurations de charge et de pression, le pneumatique 1 de l'exemple pouvant montrer des circonférences de roulement variant principalement entre 5,5 m et 5,35 m. Si la différence peut sembler minime, les conséquences de la prise en compte d'une circonférence de roulement sur les estimations de vitesse ne sont pas négligeables. Ainsi, la prise en compte d'une circonférence de roulement théorique de 5,5 m au lieu de 5,35 m peut engendrer une différence de près de 3% sur la vitesse estimée et donc également sur le glissement. Dans la mesure où le glissement, en situation de travail, est généralement inférieur à 15%, il s'agit d'une erreur non négligeable qui ne permet pas d'optimiser la conduite du véhicule.

La détermination de la circonférence de roulement par l'unité de traitement 15 permet à l'inverse de disposer d'une circonférence de roulement correspondant précisément à la configuration actuelle. Par conséquent, l'exploitation ultérieure de cette circonférence de roulement donne également des résultats plus précis. Dans le cadre de l'invention, la circonférence de roulement ainsi déterminée sur le sol 7 considéré comme ferme est utilisée pour déterminer le glissement sur un sol 7 considéré comme peu ferme. La circonférence de roulement déterminée sur sol ferme est donc enregistrée par l'unité de traitement 15 et gardée en mémoire pour une utilisation ultérieur. Il est possible de retenir une valeur moyenne sur une certaine durée afin d'améliorer la représentativité de cette circonférence de roulement.

Ainsi, lorsque le facteur de fermeté est représentatif d'un sol peu ferme sur lequel le pneumatique 1 est susceptible de présenter un glissement, l'unité de traitement 15 détermine (étape S6) le glissement du pneumatique en fonction du premier paramètre KT représentatif d'une durée d'un tour de roue du pneumatique 1, de la vitesse de translation du véhicule 9 par rapport au sol 7, et d'une circonférence de roulement du pneumatique 1 déterminée précédemment.

Plus précisément, le glissement est déterminé au moyen d'une relation faisant intervenir le premier paramètre KT représentatif d'une durée d'un tour de roue du pneumatique 1, la vitesse de translation du véhicule 9 par rapport au sol, et l'inverse de la circonférence de roulement du pneumatique 1. Typiquement, une expression d'un pourcentage de glissement du pneumatique peut être déterminée selon une relation du type :

$$G \;=\; 100 \left(1 - \frac{KT \times V_v}{Z \times C_r}\right)$$

avec G le glissement, KT le premier paramètre représentatif d'une durée d'un tour de roue du pneumatique 1, $V_v$ la vitesse de translation du véhicule 9 par rapport au sol 7, $C_r$ la circonférence de roulement du pneumatique, et Z un facteur de conversion des unités. Le facteur de conversion est par exemple de 3,6 lorsque le premier paramètre KT est exprimé en secondes, la vitesse de translation $V_v$ en kilomètres par heure et la circonférence de roulement $C_r$ en mètres. La valeur du facteur de conversion Z peut évidemment varier en fonction des unités utilisées.

L'unité de traitement de données 15 peut ainsi déterminer en temps réel le glissement affectant un pneumatique 1, puisqu'il est possible de mettre à jour ce glissement à chaque fois que le premier paramètre KT est déterminé, c'est-à-dire à chaque tour de roue. De plus, en équipant plusieurs pneumatiques 1 d'un véhicule 9, il est possible de déterminer ce glissement pour chaque pneumatique 1 indépendamment les uns des autres. Enfin, la détermination du glissement est très précise.

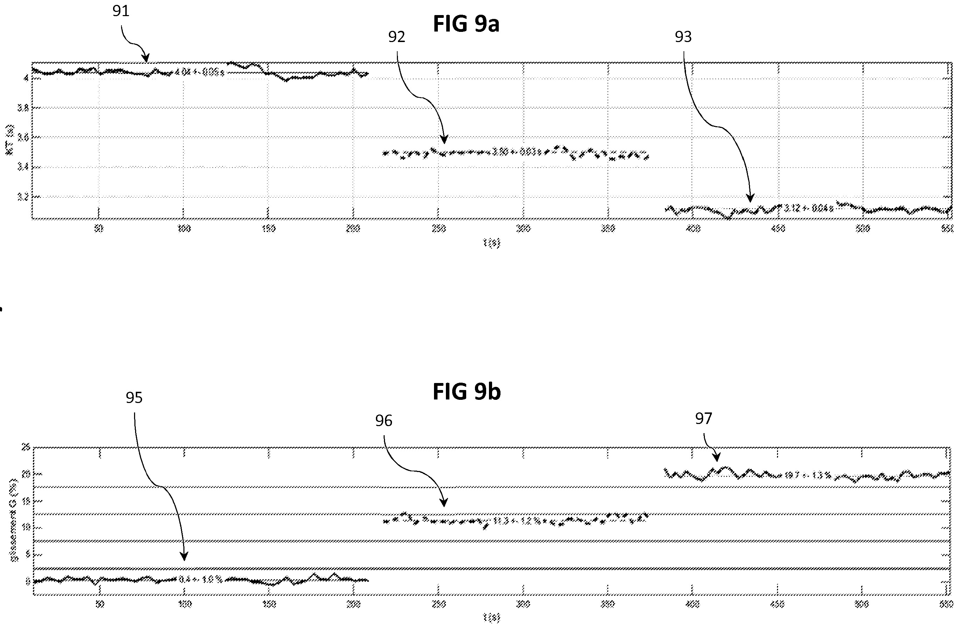

Les Fig. 9a et 9b montrent des exemples de valeurs prises par le premier paramètre KT représentatif d'une durée d'un tour de roue du pneumatique et par le glissement selon trois configurations de glissement imposé. Les mesures ont été effectuées avec un tracteur dit "maître", piloté à la vitesse GPS de 5 km/h, tractant un tracteur dit "freineur" sur une terre peu ferme (terre C1). Les mesures sont effectuées pour un pneumatique arrière du tracteur maître présentant une pression interne de 0,8 bar et soumis à une charge de 2245 daN. Les trois configurations de glissement correspondent respectivement à des glissements de 0%, 10% et 20%, qui sont adoptées successivement au cours du même déplacement. La Fig. 9a montre ainsi l'évolution du premier paramètre KT en fonction du temps, et la Fig. 9b montre l'évolution du glissement déterminé à partir du premier paramètre KT en fonction du temps.

Sur la Fig. 9a, les trois ensembles de points de mesure 91, 92, 93 pour le premier paramètre KT font ressortir des valeurs de ce premier paramètre KT de 4,04 s ($\pm$0,05), 3,50 s ($\pm$0,03), et 3,12 s ($\pm$0,04), respectivement. On constate que les valeurs sont nettement différentes et stables, et que le premier paramètre KT diminue bien avec le glissement, traduisant le fait que la roue tourne plus vite (à vitesse de translation égale). Sur la Fig. 9b, les trois ensembles de mesure 95, 96, et 97 pour le glissement, déterminé par le procédé selon l'invention selon les trois configurations susmentionnées. On trouve respectivement un glissement de 0,4% ($\pm$1%), de 11,3 % ($\pm$1,2%), et de 19,7 % ($\pm$1,3%), ce qui correspond correctement aux valeurs de glissement imposées. L'invention permet donc de déterminer précisément le glissement auquel est soumis un pneumatique.

La connaissance du glissement auquel est soumis le pneumatique présente de nombreux avantages. En particulier, le glissement ainsi déterminé peut être utilisé pour piloter le véhicule. Il est par exemple possible de modifier la vitesse du véhicule pour optimiser la traction d'une charge. Il est également possible d'utiliser cette valeur de glissement pour commander le télé-gonflage d'un pneumatique pour adapter la pression interne du pneumatique, afin d'optimiser le compromis traction/consommation. L'estimation précise du glissement permet également de choisir une configuration de travail limitant les dégâts infligés au sol sur lequel roule le véhicule.

En couplant des mesures de glissement avec des données géolocalisations synchrones, il est possible d'établir une cartographie des glissement constatés dans une parcelle, éventuellement couplés avec d'autres caractéristiques du sol. En effet, dans le cas où le véhicule 9 est un tracteur attelé à un engin de travail du sol, le glissement d'un pneumatique 1 dans une parcelle varie en fonction de la nature du sol travaillé, à la fois par les différences de charge et de fermeté. Une telle cartographie peut donc s'avérer utile pour déterminer un aménagement du sol de la parcelle, comme par exemple la mise en place d'un drainage du sol ou un amendement de celui-ci.

L'invention n'est pas limitée au mode de réalisation décrit et représenté aux figures annexées. Des modifications restent possibles, notamment du point de vue de la constitution des divers éléments sans sortir pour autant du domaine de protection de l'invention tel que défini par les revendications suivantes.

## Revendications

1. Procédé de détermination du glissement d'un pneumatique (1) monté sur un véhicule (9) et roulant sur le sol, ledit pneumatique (1) étant muni d'un capteur (10) configuré pour acquérir un signal de mesure représentatif de l'évolution de la courbure du pneumatique lors du roulement sur un sol (7), le procédé comprenant les étapes suivantes :

   - acquisition (S1) par le capteur (10) d'un signal de mesure représentatif de l'évolution de la courbure du pneumatique (1) au cours du roulement,

- détermination (S2) de données de mesure à partir du signal de mesure représentatif de l'évolution de la courbure du pneumatique (1) au cours du roulement, les données de mesure comprenant un premier paramètre (KT) représentatif d'une durée d'un tour de roue du pneumatique,
- obtention (S3) d'une mesure de la vitesse de translation du véhicule (9) par rapport au sol (7),
- obtention (S4) d'un facteur de fermeté représentatif d'un état de fermeté du sol, dérivé de mesures effectuées pendant que le pneumatique (1) roule sur ledit sol, et **caractérisé par** :

a) si le facteur de fermeté est représentatif d'un sol dur sur lequel le glissement est négligeable, détermination (S5) d'une circonférence de roulement du pneumatique en fonction du premier paramètre (KT) et de la vitesse de translation du véhicule par rapport au sol, ou
b) si le facteur de fermeté est représentatif d'un sol meuble sur lequel le pneumatique est susceptible de présenter un glissement, détermination (S6) du glissement du pneumatique en fonction du premier paramètre (KT), de la vitesse de translation du véhicule par rapport au sol, et d'une circonférence de roulement du pneumatique déterminée précédemment en a).

2. Procédé selon la revendication 1, dans lequel la circonférence de roulement du pneumatique $C_r$ est déterminée selon une relation du type :

$$C_r = Z \times KT \times V_v$$

avec KT le premier paramètre représentatif d'une durée d'un tour de roue du pneumatique, $V_v$ la vitesse de translation du véhicule (9) par rapport au sol (7), et Z un facteur de conversion des unités.

3. Procédé selon l'une des revendications précédentes, dans lequel une expression d'un pourcentage de glissement du pneumatique est déterminée selon une relation du type :

$$G = 100 \left( 1 - \frac{KT \times V_v}{Z \times C_r} \right)$$

avec G le glissement, KT le premier paramètre représentatif d'une durée d'un tour de roue du pneumatique (1), $V_v$ la vitesse de translation du véhicule par rapport au sol, $C_r$ la circonférence de roulement du pneumatique, et Z un facteur de conversion des unités.

4. Procédé selon l'une des revendications précédentes, dans lequel la vitesse de translation du véhicule (9) par rapport au sol (7) est obtenue au moyen d'un récepteur d'un système de positionnement par satellite solidaire du véhicule (9) ou radar.

5. Procédé selon l'une des revendications précédentes, dans lequel lors du roulement, au cours d'un tour de roue, la courbure du pneumatique (1) évolue selon un cycle présentant

- une partie hors contact avec le sol se caractérisant sur le signal de mesure par une courbure stable,
- une partie en contact avec le sol se caractérisant sur le signal de mesure par un pic de variation de courbure de contact (20, 30),
- une transition dite transition d'entrée entre la partie hors contact avec le sol et la partie en contact avec le sol, se caractérisant sur le signal de mesure par un pic de variation de courbure d'entrée (21, 22) opposé au pic de variation de courbure de contact (20, 30),
- une transition dite de sortie entre la partie en contact avec le sol et la partie hors contact avec le sol, se caractérisant sur le signal de mesure par un pic de variation de courbure de sortie (22, 32) opposé au pic de variation de courbure de contact (20, 30),

le premier paramètre (KT) représentatif d'une durée d'un tour de roue du pneumatique étant déterminé à partir d'une durée entre un pic de variation de courbure de sortie (22) d'un premier tour de roue et un pic de variation de courbure de sortie (32) d'un tour de roue suivant.

6. Procédé selon l'une des revendications précédentes, dans lequel les données de mesure déterminées à partir du signal de mesure représentatif de l'évolution de la courbure du pneumatique (1) au cours du roulement comprennent :

- un deuxième paramètre (KL) représentatif d'une longueur d'une surface de contact (6) avec le sol (7) lors d'un tour de roue du pneumatique, et
- un troisième paramètre (KS) représentatif d'une vitesse de mise à plat du pneumatique (1) lors du contact avec le sol (7) lors d'un tour de roue du pneumatique.

7. Procédé selon la revendication 6, dans lequel, lors du roulement, au cours d'un tour de roue, la courbure du pneumatique (1) évolue selon un cycle présentant :

- une partie hors contact avec le sol,
- une partie en contact avec le sol,

dans lequel le deuxième paramètre (KL) est déterminé à partir d'une partie du signal de mesure correspondant à la partie en contact avec le sol, et le troisième paramètre est déterminé à partir d'une partie du signal de mesure correspondant à une transition de la courbure du pneumatique (1) entre la partie hors contact avec le sol et la partie en contact avec le sol.

8. Procédé selon la revendication 6 ou la revendication 7, dans lequel, lors du roulement, au cours d'un tour de roue, la courbure du pneumatique (1) évolue selon un cycle présentant :

- une partie hors contact avec le sol se caractérisant sur le signal de mesure par une courbure stable,
- une partie en contact avec le sol se caractérisant sur le signal de mesure par un pic de variation de courbure de contact (20, 30),
- une transition dite transition d'entrée entre la partie hors contact avec le sol et la partie en contact avec le sol, se caractérisant sur le signal de mesure par un pic de variation de courbure d'entrée (21, 22) opposé au pic de variation de courbure de contact (20, 30),
- une transition dite de sortie entre la partie en contact avec le sol et la partie hors contact avec le sol, se caractérisant sur le signal de mesure par un pic de variation de courbure de sortie (22, 32) opposé au pic de variation de courbure de contact (20, 30),

le deuxième paramètre (KL) étant déterminé à partir d'une distance entre le pic de variation de courbure d'entrée (31) et le pic de variation de courbure de sortie (32),
le troisième paramètre (KS) étant déterminé par une pente entre le pic de variation de courbure d'entrée (31) et le pic de variation de courbure de contact (30).

9. Procédé selon l'une des revendications 6 à 8, dans lequel le facteur de fermeté du sol (7) est déterminé en utilisant une relation liant le facteur de fermeté du sol, le deuxième paramètre (KL) et le troisième paramètre (KS).

10. Procédé selon la revendication précédente, dans lequel la relation liant le facteur de fermeté du sol, le deuxième paramètre (KL) et le troisième paramètre (KS) est une relation linéaire, et est de la forme :

$$F = a + b \times KL + c \times KS$$

avec F le facteur de fermeté, KL le deuxième paramètre, KS le troisième paramètre, et a, b, c des coefficients fixes non nuls préalablement déterminés.

11. Unité de traitement de données (15) configurée pour obtenir une mesure de vitesse de translation du véhicule par rapport au sol et des données de mesure dérivées d'un signal de mesure représentatif de l'évolution de la courbure du pneumatique lors du roulement sur un sol, lesdites données de mesure comprenant au moins un premier paramètre (KT) représentatif d'une durée d'un tour de roue du pneumatique, l'unité de traitement de données (15) étant également configurée pour obtenir un facteur de fermeté représentatif d'un état de fermeté du sol, dérivé de mesures effectuées pendant que le pneumatique roule sur ledit sol, **caractérisé en ce que** l'unité de traitement de données étant en outre configurée pour :

a) si le facteur de fermeté est représentatif d'un sol dur sur lequel le glissement est négligeable, déterminer une circonférence de roulement du pneumatique en fonction du paramètre représentatif d'une durée d'un tour de roue du pneumatique et de la vitesse de translation du véhicule par rapport au sol, ou
b) si le facteur de fermeté est représentatif d'un sol meuble sur lequel le pneumatique est susceptible de présenter un glissement, déterminer un glissement du pneumatique en fonction du paramètre représentatif d'une durée d'un tour de roue du pneumatique, de la vitesse de translation du véhicule par rapport au sol, et d'une circonférence de roulement du pneumatique déterminée précédemment en a).

**12.** Véhicule (9) comprenant :

- au moins un pneumatique (1),
- au moins capteur (10) sensible à l'évolution de la courbure du pneumatique, configuré pour générer un signal de mesure représentatif de l'évolution de la courbure du pneumatique lors du roulement sur un sol,
- au moins un récepteur d'un système de positionnement par satellite configuré pour déterminer une mesure d'une vitesse de translation du véhicule par rapport au sol,
- une unité de traitement de données (15) configurée pour recevoir une mesure de vitesse de translation du véhicule par rapport au sol et des données de mesure dérivées d'un signal de mesure représentatif de l'évolution de la courbure du pneumatique lors du roulement sur un sol, lesdites données de mesure comprenant au moins un premier paramètre (KT) représentatif d'une durée d'un tour de roue du pneumatique, l'unité de traitement de données (15) étant également configurée pour obtenir un facteur de fermeté représentatif d'un état de fermeté du sol, dérivé de mesures effectuées pendant que le pneumatique roule sur ledit sol, **caractérisé en ce que** l'unité de traitement de données étant en outre configurée pour :

a) si le facteur de fermeté est représentatif d'un sol dur sur lequel le glissement est négligeable, déterminer une circonférence de roulement du pneumatique en fonction du paramètre représentatif d'une durée d'un tour de roue du pneumatique et de la vitesse de translation du véhicule par rapport au sol, ou
b) si le facteur de fermeté est représentatif d'un sol meuble sur lequel le pneumatique est susceptible de présenter un glissement, déterminer un glissement du pneumatique en fonction du paramètre représentatif d'une durée d'un tour de roue du pneumatique, de la vitesse de translation du véhicule par rapport au sol, et d'une circonférence de roulement du pneumatique déterminée précédemment en a), le véhicule étant configuré pour mettre en oeuvre le procédé selon l'une quelconque des revendications 1 à 10.

**Patentansprüche**

**1.** Verfahren zur Feststellung des Schlupfes eines Reifens (1), der an einem Fahrzeug (9) montiert ist und auf dem Boden abrollt, wobei der Reifen (1) über einen Sensor (10) verfügt, der dazu konfiguriert ist, ein Messsignal zu erfassen, das für den Verlauf der Krümmung des Reifens beim Abrollen auf einem Boden (7) repräsentativ ist, wobei das Verfahren die folgenden Schritte beinhaltet:

- Erfassen (S1), durch den Sensor (10), eines Messsignals, das für den Verlauf der Krümmung des Reifens (1) während des Abrollens repräsentativ ist,
- Feststellen (S2) von Messdaten anhand des Messignals, das für den Verlauf der Krümmung des Reifens (1) während des Abrollens repräsentativ ist, wobei die Messdaten einen ersten Parameter (KT) beinhalten, der für eine Dauer einer Radumdrehung des Reifens repräsentativ ist,
- Erhalten (S3) einer Messung der Fahrgeschwindigkeit des Fahrzeugs (9) relativ zum Boden (7),
- Erhalten (S4) eines Festigkeitsfaktors, der für einen Festigkeitszustand des Bodens repräsentativ ist und von Messungen abgeleitet ist, die während des Abrollens des Reifens (1) auf dem Boden durchgeführt werden, und **gekennzeichnet durch** Folgendes:

a) wenn der Festigkeitsfaktor für einen harten Boden, auf dem der Schlupf vernachlässigbar ist, repräsentativ ist, Feststellen (S5) eines Abrollumfangs des Reifens in Abhängigkeit von dem ersten Parameter (KT) und der Fahrgeschwindigkeit des Fahrzeugs relativ zum Boden, oder
b) wenn der Festigkeitsfaktor für einen weichen Boden, auf dem der Reifen zu Schlupf neigt, repräsentativ ist, Feststellen (S6) des Schlupfes des Reifens in Abhängigkeit von dem ersten Parameter (KT), der Fahrgeschwindigkeit des Fahrzeugs relativ zum Boden und einem Abrollumfang des Reifens, der zuvor in a) festgestellt wurde.

**2.** Verfahren nach Anspruch 1, wobei der Abrollumfang des Reifens $C_r$ gemäß einer Gleichung des folgenden Typs festgestellt wird:

$$C_r = Z \times KT \times V_v$$

wobei KT der erste Parameter ist, der für eine Dauer einer Radumdrehung des Reifens repräsentativ ist, $V_v$ die Fahrgeschwindigkeit des Fahrzeugs (9) relativ zum Boden (7) ist und Z ein Faktor zur Umwandlung der Einheiten ist.

3. Verfahren nach einem der vorhergehenden Ansprüche, wobei ein Ausdruck für einen Schlupfprozentsatz des Reifens gemäß einer Gleichung des folgenden Typs festgestellt wird:

$$G = 100\left(1 - \frac{KT \times V_v}{Z \times C_r}\right)$$

wobei G der Schlupf ist, KT der erste Parameter ist, der für eine Dauer einer Radumdrehung des Reifens (1) repräsentativ ist, $V_v$ die Fahrgeschwindigkeit des Fahrzeugs relativ zum Boden ist, $C_r$ der Abrollumfang des Reifens ist und Z ein Faktor zur Umwandlung der Einheiten ist.

4. Verfahren nach einem der vorhergehenden Ansprüche, wobei die Fahrgeschwindigkeit des Fahrzeugs (9) relativ zum Boden (7) mittels eines Empfängers eines im Fahrzeug (9) befindlichen Satellitenpositionsbestimmungssystems oder Radar erhalten wird.

5. Verfahren nach einem der vorhergehenden Ansprüche, wobei beim Abrollen während einer Radumdrehung die Krümmung des Reifens (1) gemäß einem Zyklus verläuft, der Folgendes aufweist:

   - einen Abschnitt ohne Bodenkontakt, der im Messsignal durch eine gleichbleibende Krümmung gekennzeichnet ist,
   - einen Abschnitt mit Bodenkontakt, der im Messsignal durch eine Kontaktkrümmungsänderungsspitze (20, 30) gekennzeichnet ist,
   - einen Übergang, als Eintrittsübergang bezeichnet, zwischen dem Abschnitt ohne Bodenkontakt und dem Abschnitt mit Bodenkontakt, der im Messsignal durch eine Eintrittskrümmungsänderungsspitze (21, 22) gekennzeichnet ist, die zu der Kontaktkrümmungsänderungsspitze (20, 30) entgegengesetzt ist,
   - einen Übergang, als Austrittsübergang bezeichnet, zwischen dem Abschnitt mit Bodenkontakt und dem Abschnitt ohne Bodenkontakt, der im Messsignal durch eine Austrittskrümmungsänderungsspitze (22, 32) gekennzeichnet ist, die zu der Kontaktkrümmungsänderungsspitze (20, 30) entgegengesetzt ist,

   wobei der erste Parameter (KT), der für eine Dauer einer Radumdrehung des Reifens repräsentativ ist, anhand einer Dauer zwischen einer Austrittskrümmungsänderungsspitze (22) einer ersten Radumdrehung und einer Austrittskrümmungsänderungsspitze (32) einer nachfolgenden Radumdrehung festgestellt wird.

6. Verfahren nach einem der vorhergehenden Ansprüche, wobei die Messdaten, die anhand des Messsignals, das für den Verlauf der Krümmung des Reifens (1) während des Abrollens repräsentativ ist, festgestellt werden, Folgendes beinhalten:

   - einen zweiten Parameter (KL), der für eine Länge einer Kontaktfläche (6) mit dem Boden (7) bei einer Radumdrehung des Reifens repräsentativ ist, und
   - einen dritten Parameter (KS), der für eine Abplattungsgeschwindigkeit des Reifens (1) beim Kontakt mit dem Boden (7) bei einer Radumdrehung des Reifens repräsentativ ist.

7. Verfahren nach Anspruch 6, wobei beim Abrollen während einer Radumdrehung die Krümmung des Reifens (1) gemäß einem Zyklus verläuft, der Folgendes aufweist:

   - einen Abschnitt ohne Bodenkontakt,
   - einen Abschnitt mit Bodenkontakt,

   wobei der zweite Parameter (KL) anhand eines Abschnitts des Messsignals festgestellt wird, der dem Abschnitt mit Bodenkontakt entspricht, und der dritte Parameter anhand eines Abschnitts des Messsignals festgestellt wird, der einem Übergang der Krümmung des Reifens (1) zwischen dem Abschnitt ohne Bodenkontakt und dem Abschnitt mit Bodenkontakt entspricht.

# EP 3 880 497 B1

8. Verfahren nach Anspruch 6 oder Anspruch 7, wobei beim Abrollen während einer Radumdrehung die Krümmung des Reifens (1) gemäß einem Zyklus verläuft, der Folgendes aufweist:

- einen Abschnitt ohne Bodenkontakt, der im Messsignal durch eine gleichbleibende Krümmung gekennzeichnet ist,
- einen Abschnitt mit Bodenkontakt, der im Messsignal durch eine Kontaktkrümmungsänderungsspitze (20, 30) gekennzeichnet ist,
- einen Übergang, als Eintrittsübergang bezeichnet, zwischen dem Abschnitt ohne Bodenkontakt und dem Abschnitt mit Bodenkontakt, der im Messsignal durch eine Eintrittskrümmungsänderungsspitze (21, 22) gekennzeichnet ist, die zu der Kontaktkrümmungsänderungsspitze (20, 30) entgegengesetzt ist,
- einen Übergang, als Austrittsübergang bezeichnet, zwischen dem Abschnitt mit Bodenkontakt und dem Abschnitt ohne Bodenkontakt, der im Messsignal durch eine Austrittskrümmungsänderungsspitze (22, 32) gekennzeichnet ist, die zu der Kontaktkrümmungsänderungsspitze (20, 30) entgegengesetzt ist,
wobei der zweite Parameter (KL) anhand eines Abstands zwischen der Eintrittskrümmungsänderungsspitze (31) und der Austrittskrümmungsänderungsspitze (32) festgestellt wird,
wobei der dritte Parameter (KS) durch eine Steigung zwischen der Eintrittskrümmungsänderungsspitze (31) und der Austrittskrümmungsänderungsspitze (30) festgestellt wird.

9. Verfahren nach einem der Ansprüche 6 bis 8, wobei der Festigkeitsfaktor des Bodens (7) unter Verwendung einer Gleichung festgestellt wird, die den Festigkeitsfaktor des Bodens, den zweiten Parameter (KL) und den dritten Parameter (KS) in Beziehung setzt.

10. Verfahren nach dem vorhergehenden Anspruch, wobei die Gleichung, die den Festigkeitsfaktor des Bodens, den zweiten Parameter (KL) und den dritten Parameter (KS) in Beziehung setzt, eine lineare Gleichung ist und die folgende Form aufweist:

$$F = a + b \times KL + c \times KS$$

wobei F der Festigkeitsfaktor ist, KL der zweite Parameter ist, KS der dritte Parameter ist und a, b, c im Vorfeld festgestellte feste Koeffizienten ungleich Null sind.

11. Datenverarbeitungseinheit (15), die dazu konfiguriert ist, eine Messung einer Fahrgeschwindigkeit des Fahrzeugs relativ zum Boden und Messdaten, die von einem Messsignal, das für den Verlauf der Krümmung des Reifens beim Abrollen auf einem Boden repräsentativ ist, abgeleitet sind, zu erhalten, wobei die Messdaten mindestens einen ersten Parameter (KT) beinhalten, der für eine Dauer einer Radumdrehung des Reifens repräsentativ ist, wobei die Datenverarbeitungseinheit (15) ferner dazu konfiguriert ist, einen Festigkeitsfaktor zu erhalten, der für einen Festigkeitszustand des Bodens repräsentativ ist und von Messungen abgeleitet ist, die während des Abrollens des Reifens auf dem Boden durchgeführt werden, **dadurch gekennzeichnet, dass** die Datenverarbeitungseinheit ferner zu Folgendem konfiguriert ist:

a) wenn der Festigkeitsfaktor für einen harten Boden, auf dem der Schlupf vernachlässigbar ist, repräsentativ ist, Feststellen eines Abrollumfangs des Reifens in Abhängigkeit von dem Parameter, der für eine Dauer einer Radumdrehung des Reifens repräsentativ ist, und der Fahrgeschwindigkeit des Fahrzeugs relativ zum Boden, oder
b) wenn der Festigkeitsfaktor für einen weichen Boden, auf dem der Reifen zu Schlupf neigt, repräsentativ ist, Feststellen eines Schlupfes des Reifens in Abhängigkeit von dem Parameter, der für eine Dauer einer Radumdrehung des Reifens repräsentativ ist, der Fahrgeschwindigkeit des Fahrzeugs relativ zum Boden und einem Abrollumfang des Reifens, der zuvor in a) festgestellt wurde.

12. Fahrzeug (9), das Folgendes beinhaltet:

- mindestens einen Reifen (1),
- mindestens einen Sensor (10), der für den Verlauf der Krümmung des Reifens empfindlich ist und dazu konfiguriert ist, ein Messsignal zu erzeugen, das für den Verlauf der Krümmung des Reifens beim Abrollen auf einem Boden repräsentativ ist,
- mindestens einen Empfänger eines Satellitenpositionsbestimmungssystems, der dazu konfiguriert ist, eine Messung einer Fahrgeschwindigkeit des Fahrzeugs relativ zum Boden festzustellen,

- eine Datenverarbeitungseinheit (15), die dazu konfiguriert ist, eine Messung einer Fahrgeschwindigkeit des Fahrzeugs relativ zum Boden und Messdaten, die von einem Messsignal, das für den Verlauf der Krümmung des Reifens beim Abrollen auf einem Boden repräsentativ ist, abgeleitet sind, zu empfangen, wobei die Messdaten mindestens einen ersten Parameter (KT) beinhalten, der für eine Dauer einer Radumdrehung des Reifens repräsentativ ist, wobei die Datenverarbeitungseinheit (15) ferner dazu konfiguriert ist, einen Festigkeitsfaktor zu erhalten, der für einen Festigkeitszustand des Bodens repräsentativ ist und von Messungen abgeleitet ist, die während des Abrollens des Reifens auf dem Boden durchgeführt werden, **dadurch gekennzeichnet, dass** die Datenverarbeitungseinheit ferner zu Folgendem konfiguriert ist:

> a) wenn der Festigkeitsfaktor für einen harten Boden, auf dem der Schlupf vernachlässigbar ist, repräsentativ ist, Feststellen eines Abrollumfangs des Reifens in Abhängigkeit von dem Parameter, der für eine Dauer einer Radumdrehung des Reifens repräsentativ ist, und der Fahrgeschwindigkeit des Fahrzeugs relativ zum Boden, oder
> b) wenn der Festigkeitsfaktor für einen weichen Boden, auf dem der Reifen zu Schlupf neigt, repräsentativ ist, Feststellen eines Schlupfes des Reifens in Abhängigkeit von dem Parameter, der für eine Dauer einer Radumdrehung des Reifens repräsentativ ist, der Fahrgeschwindigkeit des Fahrzeugs relativ zum Boden und einem Abrollumfang des Reifens, der zuvor in a) festgestellt wurde, wobei das Fahrzeug dazu konfiguriert ist, das Verfahren nach einem beliebigen der Ansprüche 1 bis 10 umzusetzen.

**Claims**

1. Method for determining the slip of a tyre (1) mounted on a vehicle (9) and running along the ground, said tyre (1) being equipped with a sensor (10) configured to acquire a measurement signal representative of the change in curvature of the tyre as it runs along the ground (7), the method comprising the following steps:

> - the acquisition (S1), by the sensor (10), of a signal representative of the change in curvature of the tyre (1) during running,
> - the determination (S2) of measurement data from the measurement signal representative of the change in curvature of the tyre (1) during running, the measurement data comprising a first parameter (KT) representative of the duration of one revolution of the wheel bearing the tyre,
> - the obtaining (S3) of a measurement of the translational speed of the vehicle (9) with respect to the ground (7),
> - the obtaining (S4) of a firmness factor representative of the condition of firmness of the ground, which is derived from measurements taken while the tyre (1) is rolling over said ground, and **characterized by:**

> a) if the firmness factor is representative of firm ground on which the slip is negligible, the determination (S5) of a rolling circumference of the tyre as a function of the first parameter (KT) and of the translational speed of the vehicle with respect to the ground, or
> b) if the firmness factor is representative of ground that is not very firm and on which the tyre is liable to slip, the determination (S6) of the slip of the tyre as a function of the first parameter (KT), of the translational speed of the vehicle with respect to the ground, and of a rolling circumference of the tyre as determined previously at a).

2. Method according to Claim 1, wherein the rolling circumference of the tyre $C_r$ is determined according to a relationship of the type:

$$C_r = Z \times KT \times V_v$$

where KT is the first parameter representative of a duration of one revolution of the wheel bearing the tyre, $V_v$ is the translational speed of the vehicle (9) with respect to the ground (7), and Z is a conversion factor for converting the units.

3. Method according to one of the preceding claims, wherein an expression for a percentage slip of the tyre is determined according to a relationship of the type:

$$G = 100 \left( 1 - \frac{KT \times V_v}{Z \times C_r} \right)$$

where G is the slip, KT is the first parameter representative of a duration of one revolution of the wheel bearing the tyre (1), $V_v$ is the translational speed of the vehicle with respect to the ground, $C_r$ is the rolling circumference of the tyre, and Z is a conversion factor for converting the units.

4. Method according to one of the preceding claims, wherein the translational speed of the vehicle (9) with respect to the ground (7) is obtained by means of a receiver of a satellite positioning system integral with the vehicle (9) or a radar.

5. Method according to one of the preceding claims, wherein, during running, over the course of one revolution of the wheel, the curvature of the tyre (1) changes according to a cycle exhibiting:

- a part not in contact with the ground, **characterized in** the measurement signal by a stable curvature,
- a part in contact with the ground, **characterized in** the measurement signal by a spike in the variation of contact curvature (20, 30),
- a transition referred to as the coming-into-contact transition between the part not in contact with the ground and the part in contact with the ground, **characterized in** the measurement signal by a coming-into-contact curvature variation spike (21, 22) that is the opposite of the spike in the variation of contact curvature (20, 30),
- a transition referred to as the coming-out-of-contact transition between the part in contact with the ground and the part not in contact with the ground, **characterized in** the measurement signal by a coming-out-of-contact curvature variation spike (22, 32) that is the opposite of the spike in the variation of contact curvature (20, 30),

the first parameter (KT) representative of a duration of one revolution of the wheel bearing the tyre being determined from a duration between a coming-out-of-contact curvature variation spike (22) of a first revolution of the wheel and a coming-out-of-contact curvature variation spike (32) of a subsequent revolution of the wheel.

6. Method according to one of the preceding claims, wherein the measurement data determined from the measurement signal representative of the change in curvature of the tyre (1) during running comprise:

- a second parameter (KL) representative of a length of a contact patch (6) in contact with the ground (7) during a revolution of the wheel bearing the tyre, and
- a third parameter (KS) representative of a rate of flattening of the tyre (1) upon contact with the ground (7) during a revolution of the wheel bearing the tyre.

7. Method according to Claim 6, wherein, during running, over the course of one revolution of the wheel, the curvature of the tyre (1) changes according to a cycle exhibiting:

- a part not in contact with the ground,
- a part in contact with the ground,

wherein the second parameter (KL) is determined from part of the measurement signal corresponding to the part in contact with the ground, and the third parameter is determined from part of the measurement signal corresponding to a transition in the curvature of the tyre (1) between the part not in contact with the ground and the part in contact with the ground.

8. Method according to Claim 6 or Claim 7, wherein, during running, over the course of one revolution of the wheel, the curvature of the tyre (1) changes according to a cycle exhibiting:

- a part not in contact with the ground, **characterized in** the measurement signal by a stable curvature,
- a part in contact with the ground, **characterized in** the measurement signal by a spike in the variation of contact curvature (20, 30),
- a transition referred to as the coming-into-contact transition between the part not in contact with the ground and the part in contact with the ground, **characterized in** the measurement signal by a coming-into-contact curvature variation spike (21, 22) that is the opposite of the spike in the variation of contact curvature (20, 30),
- a transition referred to as the coming-out-of-contact transition between the part in contact with the ground and the part not in contact with the ground, **characterized in** the measurement signal by a coming-out-of-contact curvature variation spike (22, 32) that is the opposite of the spike in the variation of contact curvature (20, 30),
the second parameter (KL) being determined from a distance between the coming-into-contact curvature variation spike (31) and the coming-out-of-contact curvature variation spike (32).
the third parameter (KS) being determined from a gradient between the coming-into-contact curvature variation spike (31) and the spike in the variation of contact curvature (30).

9. Method according to one of Claims 6 to 8, wherein the firmness factor indicating the firmness of the ground (7) is determined using a relationship connecting the firmness factor indicating the firmness of the ground, the second parameter (KL) and the third parameter (KS).

10. Method according to the preceding claim, wherein the relationship connecting the firmness factor indicating the firmness of the ground, the second parameter (KL) and the third parameter (KS) is a linear relationship, and is of the form:

$$F = a + b \times KL + c \times KS$$

where F is the firmness factor, KL is the second parameter, KS is the third parameter, and a, b and c are predetermined non-zero fixed coefficients.

11. Data processing unit (15) configured to obtain a measurement of the translational speed of the vehicle with respect to the ground, and measurement data derived from a measurement signal representative of the change in the curvature of the tyre as it runs over ground, said measurement data comprising at least a first parameter (KT) representative of the duration of one revolution of the wheel bearing the tyre, the data processing unit (15) also being configured to obtain a firmness factor representative of a condition of firmness of the ground, derived from measurements taken while the tyre is rolling over said ground, **characterized in that** the data processing unit being further configured so as to:

a) if the firmness factor is representative of firm ground, determine a rolling circumference of the tyre as a function of the parameter representative of a duration of one revolution of the wheel bearing the tyre and of the translational speed of the vehicle with respect to the ground, or
b) if the firmness factor is representative of loose ground, determine the slip of the tyre as a function of the parameter representative of a duration of one revolution of the wheel bearing the tyre, of the translational speed of the vehicle with respect to the ground, and of a rolling circumference of the tyre as determined previously at a).

12. Vehicle (9) comprising:

- at least one tyre (1),
- at least one sensor (10) sensitive to the change in the curvature of the tyre and configured to generate a measurement signal representative of the change in the curvature of the tyre as it runs over ground,
- at least one receiver of a satellite positioning system configured to determine a measurement of the translational speed of the vehicle with respect to the ground,
- a data processing unit (15) configured to receive a measurement of the translational speed of the vehicle with respect to the ground, and measurement data derived from a measurement signal representative of the change in the curvature of the tyre as it runs over ground, said measurement data comprising at least a first parameter (KT) representative of the duration of one revolution of the wheel bearing the tyre, the data processing unit (15) also being configured to obtain a firmness factor representative of a condition of firmness of the ground, derived from measurements taken while the tyre is rolling over said ground, **characterized in that** the data processing unit being further configured so as to:

a) if the firmness factor is representative of firm ground, determine a rolling circumference of the tyre as a function of the parameter representative of a duration of one revolution of the wheel bearing the tyre and of the translational speed of the vehicle with respect to the ground, or
b) if the firmness factor is representative of loose ground, determine the slip of the tyre as a function of the parameter representative of a duration of one revolution of the wheel bearing the tyre, of the translational speed of the vehicle with respect to the ground, and of a rolling circumference of the tyre as determined previously at a), the vehicle being configured to implement the method according to any one of Claims 1 to 10.

# FIG 1

# FIG 2

**FIG 3**

Acquisition par le capteur d'un signal de mesure ⟶ S1

⟶

Détermination des données de mesure ⟶ S2

⟶

Obtention d'une mesure de vitesse de translation ⟶ S3

S5

Sol dur | Obtention de la fermeté | Sol meuble

S6

Détermination de la circonférence de roulement

S4

Détermination du glissement

Circonférence de roulement

## FIG 4

## FIG 5

# FIG 6

# FIG 7

# FIG 8

FIG 9a

FIG 9b

**EP 3 880 497 B1**

## RÉFÉRENCES CITÉES DANS LA DESCRIPTION

**Documents brevets cités dans la description**

- WO 2017221578 A